# EUROPEAN PATENT SPECIFICATION

(11) **EP 2 357 560 B1**
(45) Date of publication and mention of the grant of the patent: **04.03.2015**
(21) Application number: 11156818.4
(22) Date of filing: 27.09.2007
(51) Int. Cl.: G06F 9/52, G06F 17/30

(54) **Method and system for managing by a controller a generic data lock to a data object**
Verfahren und System zum Verwalten einer allgemeinen Datensperre für ein Datenobjekt durch eine Steuerung
Procédé et système de gestion par un contrôleur de verrouillage de données génériques vers un objet de données

(30) Priority: 28.09.2006 US 540266
(43) Date of publication of application: 17.08.2011
(62) Divisional of application: 07117395.9
(73) Proprietor: SAP SE, 69190 Walldorf (DE)
(72) Inventor: Bohle, Holger, 69234, Dielheim (DE); Boeckenhauer, Jens, 69190 Walldorf (DE); Eigemann, Sven-Eric, 69207, Sandhausen (DE)
(74) Representative: Richardt Patentanwälte PartG mbB

(56) References cited:
- US-A1- 2005 091 276
- US-B1- 6 708 195
- US-B1- 6 850 938

## Description

### Technical field

The invention relates to a computer implemented method of managing a generic data lock to a data object, a data processing system and a computer program product.

### Background and related art

Services provided by a computing system may include any type of functionality provided by the system and may be implemented at least in part by software applications of the system. For example, a particular service may include a business functionality and may be implemented by an application which includes business logic to perform the business functionality. Generally speaking, legacy applications exist which have become outdated with respect to the graphical user interface, but which may still implement services which remain useful. For example, the user interface of a legacy application may have become outdated, but the service it implements may still be useful. One approach to using the services of legacy applications includes developing a new application which reuses the services of the legacy application but which updates the graphical user interface.

One problem associated with this approach is that it may be difficult to integrate existing locking behavior of legacy applications into a locking behavior of a new application. Applications typically lock data, in some manner, while the data is being modified by a particular user in order to prevent a different user from accidentally modifying an incorrect version of the data. However, a new application which reuses a service of a legacy application may do so only intermittently, and thus locks set by the legacy application may not be sufficient in a temporal sense to provide locking behavior for a process of the new application.

One problem may for example be, that the new application calls the legacy application with respect to a certain object of the legacy application, whereupon the legacy application performs a processing and terminates processing at a certain point, wherein the new application is still continuously running in the background. If in this case only the state of the art locking behavior of the legacy application would be used, another user accessing the legacy application would not obtain any knowledge about the fact that the object was already previously locked by the legacy application. Therefore, the other user would be able and allowed to perform any kinds of modifications to said object, since due to the previous termination of the processing of the legacy application the legacy application would not remember anymore its previously set lock to said data object. Since the new application is still running in parallel, any access to said object by the new application would lead to serious problems since in the meantime the other user may have already modified said data object.

Thus, some type of new locking behavior associated with the new application is desirable. Furthermore, it may be unknown exactly what type of locking behavior is implemented by the legacy application itself, for example exclusive locking or optimistic locking, and thus it may be desirable that any new locking behavior associated with the new application be developed, and be usable, without detailed knowledge of the locking behavior of the legacy application. Moreover, the locking behavior of legacy applications may not implement some aspects of data locking that have been developed in the interim between the development of the legacy application and the development of the new application. Thus it may be desirable to provide a new locking behavior associated with a new application with an updated or different aspect than was implemented in the locking behavior of the legacy application.

### Summary of the invention

The invention provides for a computer implemented method, a computer program product, and a data processing system as claimed in the independent claims. Embodiments of the invention are given in the dependent claims.

The present invention provides a computer implemented method of managing by a controller a generic data lock to a data object, the data object being accessible by the service of a second application, the method comprising receiving a data input by a current operation of a user interface of a first application, the data input being related to the data object, the data object being related to the service. The method further comprises reading a log file, the log file comprising a generic data lock associated with the data object and depending on the generic data lock, calling the service or sending a message to the user interface. In response to calling the service, an updated data lock associated with the data object is received from the second application and the log file is thereupon updated with the received updated data lock.

The method according to the invention has the advantage, that a central unit is provided which is able to manage the locking behavior with respect to the first and the second application. Any first application which intends to use a service running at the second application is controlled regarding the locking of data objects which are accessible by the service of the second application. Since the controller uses the log file to check any data locks to a data object which were previously set by the second application for a certain data object, it is possible to maintain by the controller a continuous locking control to the data object independent of the state of the second application. This allows for example the second application to terminate and quit a certain service completely, whereas due to the lock management of the controller the lock to the certain data object is still maintained even though a restart of the second application with its service will not remember anymore the previous usage of the lock to said data object.

Depending on the generic data lock the controller is able to call a certain service of the second application or to send a respective message to the user interface of the first application. For example if a second user interface tries to access a data object already locked for the first user interface, the controller may send a respective warning message to said second user interface which indicates that the access to the data object is currently locked and that the second user interface has only the possibility to have reading access to said object.

Each of the above mentioned service calls creates its own user session. This session is disposed by the time the call returns to the caller. Locks set by the service (at the second application) are of course session dependent. However, by the time the session is disposed by the run time, the locks at the second application are deleted and consequently locks used in services cannot be used for any kind of first application built on top of these services.

By using the method according to the invention, it is possible to circumvent these problems, because the management of data locks to a data object is not controlled anymore only by the second application but is managed by a superior control unit which coordinates all accesses to the second application.

In accordance with an embodiment of the invention, the generic lock is an exclusive data lock associated with the current operation of the user interface. Thereby, in case no exclusive data lock is associated with the object, the service is called. In case an exclusive data lock is associated with the data object and the exclusive data lock is further associated with a user interface, the service is also called. However, in case an exclusive data lock is associated with the data object but the exclusive data lock is not associated with the user interface, the data object is locked by the controller and a message is sent to the user interface.

Using the exclusive data lock it is possible to limit the access to a certain data object to a certain actual user interface. Once said user interface has been used for receiving the data input which is related to the data object, the service is called at the second application and even after termination of the second application this exclusive lock to said data object is still controlled i.e. maintained by the controller. Therewith, the same user interface can be used another time to call the same service of the second application and it is ensured, that said user interface still has exclusive access rights to said data object. Any other user interface which also tries to access the data object is receiving a special message from the controller which indicates that the desired access to the data object is limited or prohibited at the moment. Thereupon, the other user interface may for example be presented the possibility to completely abort the present access action or to just access the data object in read only mode.

In accordance with an embodiment of the invention, the generic lock is an optimistic lock. Thereby, in case no optimistic data lock is associated with the data object and no optimistic data lock was associated with the data object during the current operation of the user interface, the service is called. In case no optimistic data lock is associated with the data object and an optimistic data lock was previously associated with the data object during the current operation of the user interface, a message is sent to the user interface. In case an optimistic lock is associated with the data object, the service is called.

Compared to the exclusive lock, an optimistic lock provides more flexibility of accessing a certain data object. An optimistic lock allows multiple users in parallel to access a certain optimistic locked data object with the possibility, that a user interface which at a certain point desires to change the accessed data object has the right to perform such a change action. Therefore, the optimistic lock concept allows for more flexible accesses of multiple different user interfaces to the same data object.

In accordance with an embodiment of the invention, in case the optimistic lock is associated with the data object, a non-exclusive reservation on write access to the data object is granted for the user interface, wherein the optimistic lock is not preventing other user interfaces from being granted other non-exclusive reservations on write access to the data object, wherein the optimistic lock is capable of being converted to an exclusive lock, the converting comprising canceling any other optimistic locks on specific data by other users.

In other words, an optimistic lock grants only a reservation to perform a write access to the data object. This reservation can thereby be granted for a multitude of different user interfaces. However, once one of the user interfaces desires to change from a read only mode for a data object to a writing mode for the data object and to perform changes to the data object, the optimistic lock is converted to the exclusive lock which means that the user which desires to change the data object grants the exclusive right to access the data object. All other users may for example be signaled by the controller that they just lost the reservation on write access and that a change has occurred to the data object. Based on said information, each other user interface may individually decide to either continue working with the changed data object or to terminate using the certain service of the second application.

In accordance with an embodiment of the invention, the generic lock associated with the data object comprises a generic lock object and a generic lock argument, wherein the generic lock argument describes a second application data lock object and a second application data lock argument, wherein the second application data lock object and the second application data lock argument were received with the updated data lock associated with the data object from the second application.

This has the advantage of a management of data locks to data objects independent from the second application. A data input by a current operation of the user interface of the first application is uniquely associated with respective data locks set in response of calling the service at the second application. Therefore, calling the same service again can be easily identified by the controller and therefore respective data locks to data objects accessed by the given service can be easily managed.

In accordance with an preferred embodiment of the invention, the data object is comprised in a database, wherein for accessing the data object a communication is performed between the second application and the database. Alternatively, it is also possible that a communication is performed between the controller and a database or even in between the first application and the database.

In accordance with another embodiment of the invention, the generic lock type is independent of the data lock type originally implemented in the second application. This allows for a flexible implementation of different lock types like for example exclusive locks or optimistic locks dependent on the working area to be covered by the first and the second application.

In accordance with an embodiment of the invention, the method further comprises tracking of the second application data locks set by the second application, wherein the tracking is started before calling the service. This further ensures a permanent updating of the log file in order to make sure that for every new call of the service the correct locks of data objects can be provided.

In accordance with an embodiment of the invention, the second application is used in an effectively stateless manner, the effectively stateless manner comprising initiating the second application in response to the calling of the service and terminating the second application before receiving any other service calls from the first application. This has the advantage, that multiple user interfaces of even multiple first applications can use the second application in a quasi parallel manner. The second application is therewith able to support multi-user inputs: even though the second application may have been originally designed to support only one user by its original user interface, multiple user interfaces can now use the services provided by the second application in an intermitting manner. Therewith, it is possible to transform an original designated single user environment of the second application into a multi-user system.

In accordance with an embodiment of the invention, the first application and the generic data lock are associated with a first session, the second application and the second application data lock are associated with a second session, the first and the second sessions being associated with the user interface, the second session ending before the first session, the method further comprising deleting the second application data lock before terminating the second application.

In accordance with an embodiment of the invention, the method further comprises receiving an output of the second application by the controller in response to calling the service, generating, by the controller, a first checksum based on the data input received by the current operation of the user interface of the first application and the received output, associating the first checksum with the called service and storing the associated first checksum. In case of calling the same service using the same data input again, the method further comprises generating, by the execution controller, a second checksum based on said data input and the respective output received by calling the service using said data input and comparing the second checksum to the first checksum. Thereby, in case the first and the second checksum are differing, a respective message is sent to the user interface.

Such kind of implementation is advantageous in order to cover the case that a user interface is bypassing the controller and directly accessing the second application. In this case, since this user interface is not subject to the locks provided by the controller, said user interface is call services at the second application to write data and therewith to change data objects which would not be recognized by the controller. In case such kind of data object changes would occur, this would lead to a chaotic situation since a further user interface which would be accessing the second application through the controller would suddenly work with data objects with different content as originally designated to be used. Exclusive locks set by the controller would be circumvented and data consistency could not be granted anymore.

Therefore the idea is that for every service call providing the same data input, this service call should return the same output data. If for a subsequent call the input data does not return the same output data anymore the service is either not deterministic (which can be considered as a bug as long as the service does not offer any random number functionality) or the data object has changed and the application is working on outdated data objects. In order to check such a change of the output data with respect to the input data a checksum is generated every time the service is called. Checksums are stored and compared to each other each time the service is called again with the same data input. For this purpose, for example an MD5 hashing algorithm can be used.

In the case that the checksums of two accesses to a service of the second application differ, the message which is sent to the user interface may for example comprise a selection probability to read data, continue anyway or cancel the current access.

In accordance with an embodiment of the invention, the user interface of the first application is a first graphical user interface and the second application comprises a second graphical user interface presentable on a display of the second application for a user's navigation through a number of display outputs of the second application. The second application further comprises a second interface, the second interface comprising a batch input functionality, wherein said second interface is adapted to receive the call of the service, wherein the call of the service is comprised in a stack of action scripts specifying said navigation through the number of display outputs, wherein the second application executes the stack of action scripts, wherein the execution of the stack is performed by batch processing.

The first application comprises a first interface, wherein the first interface is adapted for communication with the second interface. The first application further comprises a first graphical user interface presentable on a display of the first application, wherein the display outputs of the second application are mapped to the display outputs of the first application by mapping means. Therewith in other words, the second graphical user interface of the second application can be substituted by the first graphical user interface of the first application, wherein the batch input functionality of the second application is being used for providing inputs from the first application to the second application, processing the input by a second application and returning respective responses from the second application to the first graphical user interface of the first application.

Thereby, the method further comprises receiving a navigation input by the first application, the navigation input specifying a user's navigation from a current display output of the first application to a next display output of the first application, wherein the current display output is mapped from a display output of the second application to the display output of the first application by the mapping means, wherein the specified user's navigation involves the call of the service at a second application. An action script is added to an ordered stack of action scripts maintained by the controller, wherein the added action script corresponds to the navigation input, wherein the added action script is added last in the order of the ordered stack, wherein the added action script is unpopulated by data input. The service is then called by providing the ordered stack of action scripts to the second interface by the controller and executing the ordered stack of action scripts by the second application according to the order given by the ordered stack of action scripts. A display output of the second application resulting from the execution of the ordered stack is mapped to the next display output of the first application by the mapping means. A data input is then received at the first graphical user interface, wherein the data input is received with respect to the said next display output.

The added action script is then populated with said data input and the ordered stack of action scripts comprising the populated action script is provided to the second interface by the execution controller. The ordered stack of action scripts comprising the populated action script is executed by the second application according to the order given by the ordered stack of action scripts. A display output of the second application resulting from the execution of the ordered stack comprising the populated action script is mapped to a next consecutive display output of the first application by the mapping means. Finally the previous steps are repeated until a stop command is received at a first graphical user interface of the first application.

It has to be noted, that the ordered stack of action scripts may comprise calling a multitude of services. The above mentioned improved method has the advantage, that a first graphical user interface of the first application can be used to redirect display outputs originally designated for the second graphical user interface of the second application to the first graphical user interface of the first application. This allows for example for an improved presentation of data originally designated for a second graphical user interface while maintaining the original software being executed with the second application. The second application can therewith be indirectly upgraded with a new graphical user interface and a need for a reprogramming of the software of the second application for the only purpose for improving the output of the second graphical user interface can be omitted.

The first graphical user interface directly calls the controller and passes data on the controller. Then the controller invokes the second application by means of the service call which is synchronously processed in background mode. As a parameter, this call passes a sequence of screen declarations, field values and navigation commands. According to the sequence, the screen outputs of the second application are processed in the background with integrated functional logic of the second application.

A call of the second application is now able to return messages. The controller picks up the screen values generated by the second application and this way, the field values generated by the second applications can be transferred and mapped to the first application.

By passing the data from the first application to the controller, the controller is immediately able to determine if a respective call of the service by the second application with respect to the received data concerns any data objects which have been previously locked in any way due to previous accesses through the controller.

The reason for using an ordered stack of action scripts instead of directly processing commands received at the first application at the second application and returning respective final values in terms of screen outputs is, that at each action like a navigation input or a data input, the data are freshly received from the second application. The current action stack corresponds to a state hold in the second application even though the communication itself may be stateless. In this way, the first application and the second application stay always synchronized, i.e. the first application cannot miss any changes like implicit correction of values occurring in the second application.

Especially for the embodiment of processing a stack of action scripts by the second application the method of managing a generic data lock to a data object by a controller is extremely useful: if for example a stack of action scripts comprises accessing a certain data object comprised in a database of the second application, a user may navigate through certain display outputs at a first application, wherein the navigation is being based on the content of said data object. Since the second application with its respective service is being called every time when the stack of action scripts is passed by the controller to the second application, after finishing batch processing the second application will not remember anymore any respective data locks previously set for this data object. Therefore, in between providing the stack of action scripts to the second application a first time and providing the ordered stack of action scripts comprising, due to a new navigation, an added action script at a second time, without the data object having been permanently locked by the controller, in the meantime a different user could have had access the data object and could have had changed the data object. This would lead to a situation, that suddenly the original user is working with an outdated data object when calling the service a second time. By locking the data object by the controller for the user interface of the first application (out of multiple first applications), a permanent control over data object access and integrity is available.

In accordance with an embodiment of the invention, in case it is not possible to populate the added action script with data input, the steps previous of receiving a data input are performed again. Such a situation may occur, if for example after execution of the ordered stack of action scripts the display output of the second application mapped to the next display output of the first application does not comprise any possibility to input data. This may for example occur if said next display output of the first application only displays various possibilities a user can use to navigate to different next user input screens. In this case, it is of course not possible to populate the added action script with any data input, since it is not possible for a user to provide any data input at a present state of display output of the first application.

In another aspect, the invention relates to a computer program product comprising computer executable instructions adapted to perform the method according to the invention.

In another aspect, the invention relates to a data processing system comprising a first application, a second application and a controller, the first application comprising a user interface, the controller comprising means for receiving a data input by a current operation of the user interface of the first application, the data input being related to the data object, the data object being related to the service, means for reading a log file, the log file comprising a generic data lock associated with the data object. The controller further comprises means for calling the service and means for sending a message to the user interface. The controller further comprises means for determining if the service is called or if a message is sent to the user interface, wherein the controller is adapted to, depending on the generic data lock, determining if the service is to be called or if a message is to be sent to the user interface. The controller further comprises means for receiving an updated data lock associated with the data object from the second application in response to calling the service and means for updating the log file with the received updated data lock.

Described is a computer implemented method of coupling by a controller a first application program running on a first data processing system to a second application program running on a second data processing system, the controller comprising a log file for storing a plurality of generic data locks to data objects, the data objects being accessible by a plurality of services of the second application, the method comprising,
- receiving by a current user input operation a data input via a user interface of the first data processing system, the data input specifying at least one of the plurality of data objects and one service of the plurality of services,
- reading the log file,
- determining whether a colliding lock for the at least one of the plurality of data objects is comprised in the log file, wherein in case a colliding lock is determined a message is sent to the user interface and wherein in case no colliding lock is determined the service is called,
- in response to calling the service, receiving an updated data lock associated with the data object from the second application, and
- updating the log file with the received updated data lock,
wherein
the second application program is setting locks and releasing all locks set before terminating, the method further comprising activating tracking of all locks set (412) and released (416) by the second application program (112) before calling the second application by the controller, and based on the locks set by the second application, the first application creating generic locks for all objects for which locks have been set by the second application.

In accordance with an embodiment of the invention the generic lock is an exclusive data lock associated with the current operation of the user interface.

In accordance with an embodiment of the invention
- in case no exclusive data lock is associated with the data object, calling the service,
- in case an exclusive data lock is associated with the data object and the exclusive data lock is further associated with the user interface, calling the service,
- in case an exclusive data lock is associated with the data object and the exclusive data lock is unassociated with the user interface, locking the data object and sending the message to the user interface.

In accordance with an embodiment of the invention, the generic lock is an optimistic lock.

In accordance with an embodiment of the invention
- in case no optimistic data lock is associated with the data object and no optimistic data lock was associated with the data object in the current operation of the user interface, calling the service,
- in case no optimistic data lock is associated with the data object and an optimistic data lock was associated with the data object in the current operation of the user interface, sending the message to the user interface,
- in case an optimistic data lock is associated with the data object, calling the service.

In accordance with an embodiment of the invention in case the optimistic lock is associated with the data object, granting a non-exclusive reservation on write access to the data object for the user interface, the optimistic lock not preventing other user interfaces from being granted other non-exclusive reservations on write access to the data object, wherein the optimistic lock is capable of being converted to an exclusive lock, the converting comprising canceling any other optimistic locks on the specific data by other users.

In accordance with an embodiment of the invention the generic data lock associated with the data object comprises a generic lock object and a generic lock argument, wherein the generic lock argument describes a second application data lock object and a second application data lock argument, wherein the second application data lock object and the second application data lock argument were received with the updated data lock associated with the data object from the second application.

In accordance with an embodiment of the invention the data object is comprised in a database, wherein for accessing the data object a communication is performed between the second application and the database.

In accordance with an embodiment of the invention the generic lock type is independent of the second application data lock type.

In accordance with an embodiment of the invention the method further comprises tracking of the second application data locks set by the second application, wherein the tracking is started before calling the service.

In accordance with an embodiment of the invention the second application is used in an effectively stateless manner, the effectively stateless manner comprising initiating the second application in response to the calling of the service and terminating the second application before receiving any other service calls from the first application.

In accordance with an embodiment of the invention the first application and the generic data lock are associated with a first session, the second application and the second application data lock are associated with a second session, the first and second sessions being associated with the user interface, the second session ending before the first session, the method further comprising deleting the second application data lock before terminating the second application.

In accordance with an embodiment of the invention the method further comprises:
- receiving an output of the second application by the controller in response to calling the service,
- generating, by the controller, a first checksum based on the data input received by the current session of the user interface of the first application and the received output,
- associating the first checksum with the called service and storing the associated first checksum;
- in case of calling the same service using the same data input again, generating, by the execution controller, a second checksum based on said data input and the respective output received by calling the service using said data input and comparing the second checksum to the first checksum.

In accordance with an embodiment of the invention in case the first and the second checksum are differing, sending a message to the user interface.

In accordance with an embodiment of the invention
- the user interface of the first application is a first graphical user interface,
- the second application comprises a second graphical user interface presentable on a display of the second application for a users navigation through a number of display outputs of the second application;
- the second application further comprises a second interface, the second interface comprising a batch input functionality, wherein said second interface is adapted to receive the call of the service, wherein the call of the service is comprised in a stack of action scripts specifying said navigation though the number of display outputs, wherein the second application executes the stack of action scripts, wherein the execution of the stack is performed by batch processing;
- the first application comprises a first interface, wherein the first interface is adapted for communication with the second interface;
- the first application further comprises the first graphical user interface presentable on a display of the first application, wherein the display outputs of the second application are mapped to the display outputs of the first application by mapping means.

In accordance with an embodiment of the invention the method further comprises:
- receiving a navigation input by the first application, the navigation input specifying a users navigation from a current display output of the first application to a next display output of the first application, wherein the current display output is mapped from a display output of the second application to the display output of the first application by the mapping means, wherein the specified users navigation involves the call of the service at the second application;
- adding an action script to an ordered stack of action scripts maintained by the controller, wherein the added action script corresponds to the navigation input, wherein the added action script is added last in the order of the ordered stack, wherein the added action script is unpopulated by data input;
- calling the service by providing the ordered stack of action scripts to the second interface by the controller and executing the ordered stack of action scripts by the second application according to the order given by the ordered stack of action scripts;
- mapping a display output of the second application resulting from the execution of the ordered stack to the next display output of the first application by the mapping means;
- receiving a data input at the first graphical user interface, the data input being received with respect to said next display output;
- populating the added action script with said data input;
- providing the ordered stack of action scripts comprising the populated action script to the second interface by the execution controller;
- executing the ordered stack of action scripts comprising the populated action script by the second application according to the order given by the ordered stack of action scripts;
- mapping a display output of the second application resulting from the execution of the ordered stack comprising the populated action script to a next consecutive display output of the first application by the mapping means;
- repeating the previous steps until a stop command is received at the first graphical user interface of the first application.

In accordance with an embodiment of the invention in case it is not possible to populate the added action script with data input, the steps previous of receiving a data input are again performed.

It is further disclosed a computer program product comprising computer executable instructions adapted to perform any of the previous method steps.

Further described is a data processing system comprising a first application, a second application and a controller, the first application comprising a user interface, the controller comprising:
- means for receiving a data input by a current operation of the user interface of the first application, the data input being related to the data object, the data object being related to the service,
- means for reading a log file, the log file comprising a generic data lock associated with the data object,
- means for calling the service and means for sending a message to the user interface,
- means for determining if the service is called or if a message Is sent to the user interface, wherein the controller is adapted to, depending on the generic data lock, determining if the service is to be called or if a message is to be send to the user interface,
- means for receiving an updated data lock associated with the data object from the second application in response to calling the service, and
- means for updating the log file with the received updated data lock
   wherein

the second application is further adapted for setting locks and releasing all locks set before terminating, the system further comprising means for activating tracking of all locks set by the second application before calling the second application by the controller, and means for creating generic locks by the first application for all objects for which locks have been set by the second application, the means for creating generic locks being adapted for creating the generic locks based on the locks set by the second application.

In accordance with an embodiment of the invention the generic lock is an exclusive data lock associated with the current operation of the user interface, the system further comprising:
means for locking the data object,
- means for sending a message to the user interface,
- means for determining if an exclusive data lock is associated with the data object,
- means for determining if the exclusive data lock is further associated with the user interface,
wherein the controller is adapted for
- calling the service in case no exclusive data lock is associated with the data object,
- calling the service in case an exclusive data lock is associated with the data object, wherein the exclusive data lock is further associated with the user interface,
- locking the data object and sending a message to the user interface in case an exclusive data lock is associated with the data object, wherein the exclusive data lock is unassociated with the user interface.

In accordance with an embodiment of the invention the generic lock is an optimistic lock, the controller further comprising:
- means for determining if an optimistic data lock is associated with the data object,
wherein the controller is adapted for
- calling the service in case no optimistic data lock is associated with the data object and no optimistic data lock was associated with the data object in the current operation of the user interface,
- sending a message to the user interface in case no optimistic data lock is associated with the data object and an optimistic data lock was associated with the data object in the current operation of the user interface,
- calling the service in case an optimistic data lock is associated with the data object.

In accordance with an embodiment of the invention the system further comprises
- means for granting a non-exclusive reservation on write access to the data object for the user interface,
- means for converting an optimistic lock to an exclusive lock, wherein the controller is further adapted to grant a non-exclusive reservation on write access to the data object for the user interface in case the optimistic lock is associated with the data object, the optimistic lock not preventing other user interfaces from being granted other non-exclusive reservations on write access to the data object, wherein the optimistic lock is capable of being converted to an exclusive lock, the converting comprising canceling any other optimistic locks on the specific data by other users.

In accordance with an embodiment of the invention the system comprises a database.

In accordance with an embodiment of the invention the system further comprises means for tracking of the second application data locks set by the second application, wherein the tracking is started before calling the service.

In accordance with an embodiment of the invention the second application is adapted to be used in an effectively stateless manner.

In accordance with an embodiment of the invention the system further comprises:
- means for receiving an output of the second application by the controller in response to calling the service,
- means for generating, by the controller, a first checksum based on the data input received by the current session of the user interface of the first application and the received output,
- means for associating the first checksum with the called service and storing the associated first checksum;
- means for generating, in case of calling the same service using the same data input again, a second checksum based on said data input and the respective output received by calling the service using said data input and
- means for comparing the second checksum to the first checksum.

In accordance with an embodiment of the invention the system further comprises means for sending a message to the user interface in case the first and the second checksum are differing.

In accordance with an embodiment of the invention
- the user interface of the first application is a first graphical user interface,
- the second application comprises a second graphical user interface presentable on a display of the second application for a users navigation through a number of display outputs of the second application;
- the second application further comprises a second interface, the second interface comprising a batch input functionality, wherein said second interface is adapted to receive the call of the service, wherein the call of the service is comprised in a stack of action scripts specifying said navigation though the number of display outputs, wherein the second application executes the stack of action scripts, wherein the execution of the stack is performed by batch processing;
- the first application comprises a first interface, wherein the first interface is adapted for communication with the second interface;
- the first application further comprises the first graphical user interface presentable on a display of the first application, wherein the display outputs of the second application are mapped to the display outputs of the first application by mapping means.

In accordance with an embodiment of the invention the system further comprises:
- means for receiving a navigation input by the first application, the navigation input specifying a users navigation from a current display output of the first application to a next display output of the first application, wherein the current display output is mapped from a display output of the second application to the display output of the first application by the mapping means, wherein the specified users navigation involves the call of the service at the second application;
- means for adding an action script to an ordered stack of action scripts maintained by the controller, wherein the added action script corresponds to the navigation input, wherein the added action script is added last in the order of the ordered stack, wherein the added action script is unpopulated by data input;
- means for calling the service by providing the ordered stack of action scripts to the second interface by the controller and executing the ordered stack of action scripts by the second application according to the order given by the ordered stack of action scripts;
- means for mapping a display output of the second application resulting from the execution of the ordered stack to the next display output of the first application by the mapping means;
- means for receiving a data input at the first graphical user interface, the data input being received with respect to said next display output;
- means for populating the added action script with said data input;
- means for providing the ordered stack of action scripts comprising the populated action script to the second interface by the execution controller;
- means for executing the ordered stack of action scripts comprising the populated action script by the second application according to the order given by the ordered stack of action scripts;
- means for mapping a display output of the second application resulting from the execution of the ordered stack comprising the populated action script to a next consecutive display output of the first application by the mapping means;
- means for repeating the previous steps until a stop command is received at the first graphical user interface of the first application.

In accordance with an embodiment of the invention the system further comprises means for performing again the steps previous of receiving a data input in case it is not possible to populate the added action script with data input.

### Brief description of the drawings

So that features of the present invention can be understood in detail, a description of the invention can be had by reference to embodiments, some of which are illustrated in the appended drawings. It is to be noted, however, that the appended drawings illustrate only particular embodiments of the invention and are therefore not to be considered limiting of its scope, for the invention may admit to other equally effective embodiments.
- FIG. 1: is a schematic diagram depicting one embodiment of a software.
- FIG. 2: is a schematic diagram depicting one embodiment of a computing environment.
- FIG. 3: is a flow chart depicting a schematic representation of one embodiment of a method.
- FIG. 4: is a flow diagram depicting another schematic representation of one embodiment of the method depicted in FIG. 3.
- FIG. 5: is a flow chart depicting a schematic representation of at least part of one embodiment of the method depicted in FIG. 3, the embodiment of the method depicted in FIG. 5 including providing optimistic generic locking behavior.
- FIG. 6: is a flow chart depicting a schematic representation of at least part of one embodiment of the method depicted in FIG. 3, the embodiment of the method depicted in FIG. 6 including a hashing functionality.
- Fig. 7: shows a flowchart illustrating the method of managing a generic lock to a data object.
- Fig. 8: shows a flowchart illustrating a method of managing an exclusive lock to a data object
- Fig. 9: shows a flowchart illustrating a method of managing an optimistic lock to a data object
- Fig. 10: shows a block diagram illustrating a data processing system according to the invention.

### Detailed description

Embodiments are related to providing a generic locking behavior associated with a first application which utilizes a service performed by a second application.

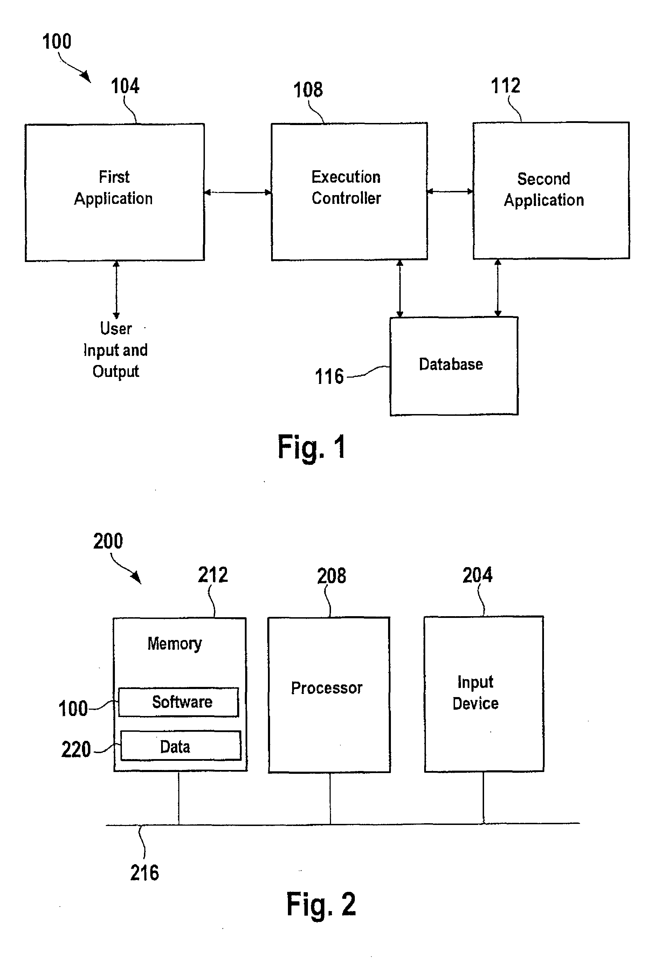

FIG. 1 depicts one embodiment of a software 100. The exemplary embodiment of the software 100 depicted in FIG.1 comprises a first application 104, an execution controller 108 and a second application 112. The first application 104 is capable of receiving an input from a user, and communicating with the execution controller 108. The execution controller 108 is capable of communicating with both the first application 104 and the second application 112. The second application 112 is capable of performing a service. The performing of the service by the second application optionally includes accessing the database 116. In one embodiment, the execution controller 108 is also capable of accessing the database 116. In one embodiment, the first application 104 is a relatively newer application and the second application 112 is a relatively older application, i.e., a legacy application. For example, the first application 104 can be developed to update some undesirable or outmoded aspect of the second application 112. In one embodiment, the first application 104 provides a user interface that is updated relative to a user interface of the second application 112. Other embodiments of the software 100 also exist.

The software 100 depicted in FIG. 1 runs in, and is part of, a computing environment 200. FIG. 2 depicts an exemplary embodiment of the computing environment 200. The computing environment 200 comprises an input device 204, a processor 208, a memory 212 and a communication line 216. The memory 212 further comprises data 220 and the software 100, which are stored in the memory 212 at least at some moment in time. The input device 204 optionally comprises at least one of: a keyboard, a mouse, a voice activated controller, an optical controller, an infrared controller, or other suitable input device. The memory 212 optionally comprises at least one of a random access memory, a disk storage memory, or other suitable memory. The software 100 comprises computer program instructions which may be accessed and executed by the processor 208. The software 100 is implemented in any suitable software language such as, for example, Java, C, C++. The data 220 optionally comprises data which accessible by or integral to the database 116.

The memory 212, processor 208 and input device 204 are connected together, and communicate with each other, by means of the communication line 216. In one embodiment, the communication line 216 comprises a system bus, and the computing environment 200 comprises a single computer. In another embodiment, the communication line 216 comprises a network element, and the computing environment 200 comprises a distributed computing environment. In one embodiment in which the computing environment 200 is distributed, the memory 212, processor 208 and input device 204 are optionally distributed across different locations. In one embodiment in which the computing environment 200 is distributed, the computing environment 200 optionally comprises a plurality of some or all of the memory 212, the processor 208 and the input device 204. Other configurations of the computing environment 200 are also possible.

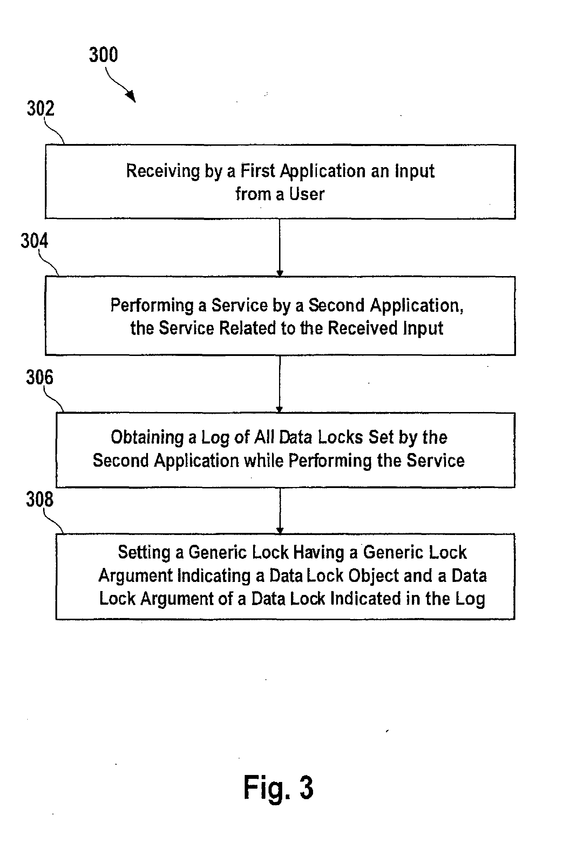

FIG. 3 depicts a schematic representation of one embodiment of a method 300. The method of FIG. 3 is merely one way of carrying out the various embodiments described herein, since variations of the embodiment of the method 300 depleted in FIG. 3 are possible.

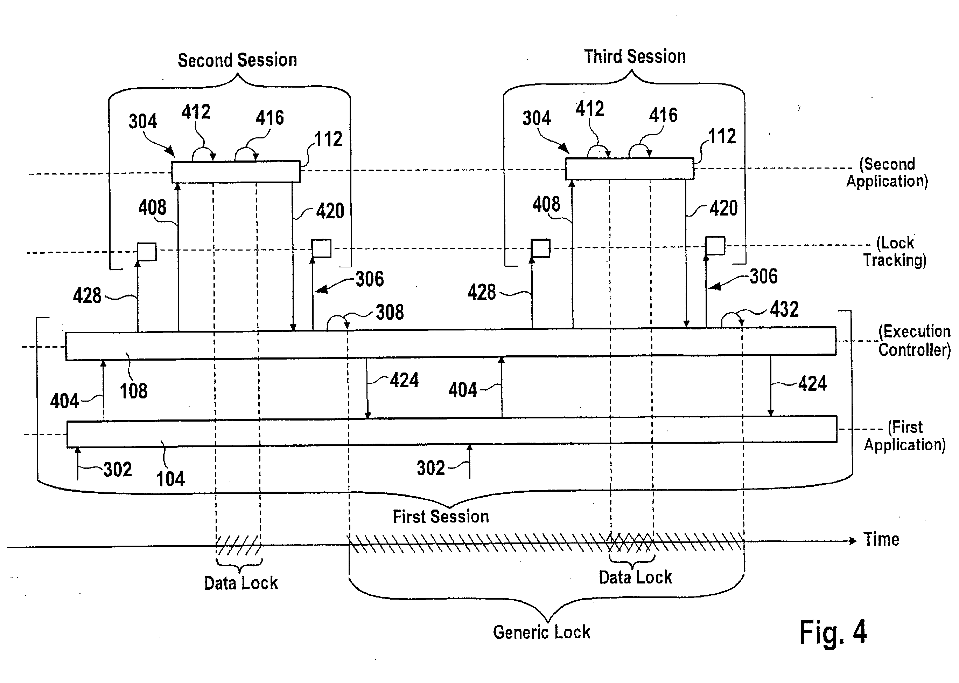

Additionally, FIG. 4 depicts another schematic representation of one embodiment of the method 300 depicted in FIG. 3. The schematic representation FIG. 4 may be useful to further understand embodiments of the method 300 depicted in FIG. 3, and contains additional visual elements, such as arranging the various steps of the method 300 according to a time axis, and also visually organizing elements of the method 300 discussed below.

In one embodiment, as depicted in FIG. 1, the method 300 begins at step 302. At step 302, an input from the user is received at the first application 104. The receiving in step 302 optionally comprises the user entering the input using the input device 204. For example, in one embodiment, the first application 104 comprises a graphical user Interface, and the user enters the input by manipulating elements of the graphical user interface. In one embodiment, the first application 104 is capable of individually assuming a plurality of different states, each state comprising a specific visual configuration of the graphical user interface, including the visual arrangement of graphical elements and specific data displayed by the state. For the sake of simplicity, the output of a graphical user interfaces presentable on a display of an application is denoted by the term 'state of an application'. The received input optionally changes the state of the first application 104. The receiving in step 302 may also comprise receiving alphanumerical data from the user, or receiving a command from the user. In one embodiment, the first application 104 does not comprise business logic related to Implementing a service.

Step 304 is performed after step 302. At step 304, a service is performed by the second application 112. The service can include any type of functionality capable of being provided by the second application 112 running in the computing environment 200. For example, in one embodiment the service comprises some type of business functionality. Many different types of business functionalities are envisioned, including, for example, interacting with customers or clients, maintaining employee data, or performing transactions. Exemplary business services include generating a customer order for a product, changing the customer order, or deleting the customer order. Other types of services are also possible, including services that are not related to businesses. In one embodiment, the second application 112 comprises logic which defines rules for performing the service. For example, the second application 112 optionally comprises business logic which defines the rules for performing a service related to business functionality.

In one embodiment, the service performed by the second application 112 comprises accessing the database 116. The database 118 optionally comprises both data and computer program instructions. Accessing the database 116 by a component of the software 100 typically comprises forming a communication link between the component and the database 116. The communication link, which has a particular duration over time, between the component and the database 116 is known as a session. A particular session is usually associated with a particular user. Different embodiments of sessions are possible. For example, in one embodiment, a particular session comprises a communication link between the second application 112 and the database 116. In another embodiment, a particular session comprises a communication link between the execution controller 108 and the database 118. In one embodiment, the database 116 comprises components that provide a server functionality, and the execution controller 108 and the second application, 112 each comprise components that provide a client functionality relative to the server functionality. In such a client-server embodiment, the communication link of the session comprises a link between a server and a client.

In one embodiment of the method 300, the first application 104 is associated with a first session and the second application 112 is associated with a second session. The first and second sessions are both associated with the user. In one embodiment, the first session comprises a first communication link involving the execution controller 108, and the second session comprises a second communication link involving the second application 112, the second communication link being a different communication link than the first communication link. In one embodiment, the first session comprises a first communication link involving the execution controller 108 and the database 116, and the second session comprises a second communication link involving the second application 112 and the database 116, the second communication link being a different communication link than the first communication link. In one embodiment, the first session comprises a first communication link involving the execution controller 108 and a server, and the second session comprises a second communication link involving the second application 112 and a server, the second communication link being a different communication link than the first communication link. In one embodiment, the server may be regarded as part of the database 116.

In one embodiment, the performing of the service in step 304 comprises executing a plurality of commands by the second application 112 to perform the service. The service is related to the input received by the first application 104, but is not limited to a one-to-one correspondence between input commands received by the first application 104 and commands executed by the second application 112 to perform the service. For example, the input received by the first application 104 may comprise a single input command, such as for example, save, print, or modify, but the performing of the related service by the second application 112 may comprise executing a plurality of commands.

In one embodiment in which the method 300 is implemented using the software 100 depicted in FIG. 1, the execution controller 108 acts as an intermediary between the first application 104 and the second application 108. For example, In one embodiment, the method 300 comprises the first application 104 invoking the service (see step 404 in FIG. 4) from the second application 112 through the execution controller 108. The invoking 404 of the service through the execution controller 108 is in response to the receiving in step 302. That is, the first application 104 receives the input from the user and communicates information related to the input to the execution controller 108 to invoke 404 the service from the second application 112. The execution controller 108 then requests 408 the service from the second application 112 in response to the invoking 404.

The performing of the service in step 304 comprises setting 412 at least one data lock by the second application 112. Data locks are typically set by applications to synchronize access to data for a plurality of users. For example, data locks can prevent different users from accidentally modifying an incorrect version of data, or to prevent multiple users from modifying the same data at the same time. For example, a data lock can deny write access to specific data for a second user while a first user (i.e. the user discussed thus far) is granted write access to the specific data. During the performing of step 304, the at least one data lock is set 412 by the second application 112 to prevent other users (e.g. the second user) from modifying at least some of the data involved in the performing of the service at step 304. The setting 412 of the data lock also grants the first user write access to the specific data. Upon completing the performance of the service by the second application at step 304, the at least one data lock that was set during the performance of the service is deleted 416.

In one embodiment, the data locks set 412 by the second application 112 are at least partially implemented by the database 116. In one embodiment, the data locks set 412 by the second application 112 are at least partially implemented by a server in communication with the second application 112. For example, in one embodiment, the data locks set 412 by the second application 112 are at least partially implemented by a server functionality that is part of the database 116. In one embodiment, setting 412 of data locks comprises storing information in a memory location globally accessible to relevant portions of the software 100 that may potentially be modifying the data.

A specific data lock set 412 by the second application 112 involves a data lock object and a data lock argument. The data lock object indicates a portion of the data 220 that may be involved in the data locking. In one embodiment, the data lock object indicates a database table. In another embodiment, the data lock object indicates both the database table and a key field of the database table. The data lock object can optionally indicate a plurality of database tables. The data lock object can also optionally indicate a plurality of key fields of the database table. The data lock argument indicates specific data locked by the data locking functionality. In one embodiment, the data lock argument indicates a specific value of a key field of the database table, and thus, in such an embodiment, the data lock argument indicates which subset of the rows of the database table, specified by the data lock object, are to be locked. In one embodiment, the specific value of the data lock argument is a specific value of the key field indicated by the data lock object. In another embodiment, the specific value of the data lock argument is a value of a primary key field that is known to the database 116, but not necessarily indicated by the data lock object.

The performing of the service in step 304 returns 420 a first result by the second application 112 to the execution controller 108. In one embodiment, the execution controller 108 returns 424 a second result, based on the first result, to the first application 104. In another embodiment, the first and second results comprises output data.

Step 306 is performed after step 304. At step 306, a log is obtained of all data locks set 412 by the second application 112 during the performing of the service at step 304. For each data lock set 412 by the second application 112, the log indicates the corresponding data lock object and data lock argument. At step 306, the method 300 obtains at least one specific data lock object and at least one specific data lock argument related to at least one specific data lock that was set 412 by the second application 112 during the performing of the service at step 304. In one embodiment, the method 300 obtains a plurality of specific data lock objects and a plurality of specific data lock arguments of a corresponding plurality of specific data locks that were set 412 by the second application 112 during the performing of the service at step 304.

In one embodiment in which the method 300 is implemented using the software 100 depicted in FIG. 1, the method 300 comprises enabling 428, by the execution controller 108, tracking of the data locks set 412 by the second application 112. The enabling 428 by the execution controller 108 is in response to the invoking 404 of the service by the first application 104; and the requesting 408, by the execution controller 108, of the service from the second application 112 is performed after the enabling 428 of the tracking of data locks. In one embodiment, the enabling 428 of the tracking of data locks is performed by the execution controller 108. In one embodiment, the enabling 428 of the tracking of data locks is performed by the execution controller 108 in combination with a global resource available to the software 100 in the computing environment 200, such as a server with which components of the software 100 are capable of communicating. For example, in one embodiment, the enabling 428 comprises the execution controller 108 communicating with a software component of a server managing data locks. In one embodiment, such a server can be considered as a part of the database 118.

Step 308 is performed after step 306. At step 308, a generic lock is set. The generic lock provides a generic locking behavior for a process conducted by the first application 104 appropriate to, for example, the context of the first application 104 using services provided by the second application 112. The generic locking accommodates intermittent use of the services of the second application 112 and its data locking behavior. In one embodiment, the generic locking behavior can also provide locking behavior functionality which is enhanced or different relative to the data locking behavior of the second application 112.

The generic lock has an associated generic lock object and a generic lock argument. The generic lock is more general than the data lock and can lock different types of functionalities. The generic lock object indicates a type of the generic locking functionality. For example, in one embodiment, the generic lock object indicates that the generic lock object locks against the use of data locks. The generic lock argument indicates a specific target of the generic locking functionality. For example, in one embodiment, the generic lock argument indicates a specific data lock to lock. In the method 300, the value of the generic lock argument of the generic lock set during the setting at step 308 indicates the specific data lock object and the specific data lock argument of the at least one specific data lock obtained from the log of data locks at step 306. In one embodiment, the setting of step 308 sets a generic lock corresponding to at least one data lock set 412 by the second application 112 during the performing of the service at step 304. In one embodiment, the setting of step 308 sets a generic lock for each data lock set 412 by the second application 112 during the performing of the service at step 304.

One functionality of the generic lock is to prevent the setting of other data locks having the specific data lock object and the specific data lock argument, obtained from the log at step 306, by other users while the first user is conducting an ongoing process in the first application 104. For example, in one embodiment, the fist application 104 individually invokes 404 a plurality of services from the second application 112 over a period of time, and the second application 112 is used in an effectively stateless manner. Using the second application in an effectively stateless manner comprises: initiating an instance of the second application 112 in response to a service request 408 (e.g., thus also in response to the invoking 404 of the service by the first application 104 through the execution controller 108), executing all commands within the second application 112 necessary to perform the service, and then terminating the instance of the second application 112 before responding to any other service requests (i.e., additional invocations 404 of services of the second application 112 by the first application 104 through the execution controller 108). Thus, when used in an effectively stateless manner, the second application 112 initiates, performs a service, and then terminates relatively quickly. It is not kept running once the service has been performed. Without the generic locking provided by the method 300, invoking 404 a plurality of services of the second application 112 individually over a period of time would result in undesirable gaps in data locking provided by the second application 112 between the individual performances of the services when the second application 112 is not running. During these gaps, during which the data locking provided by the second application 112 would be inactive, a second user, without the generic locking provided by the method 300, could undesirably modify data involved in the ongoing process being conducted by the first user via the first application 104.

The generic locking provided by the method 300 provides a solution for these undesirable gaps in data locking coverage. The generic locking provides locking behavior to the combined use of the first application 104 and the second application 112 that prevents the second user from undesirably modifying the data during the ongoing process being conducted by the first user. The generic lock is able to perform this functionality in part because the generic lock argument indicates the specific data lock and specific data lock argument obtained from the data lock log at step 306, and as such is able to prevent other users from setting data locks having this specific data lock object and specific data lock argument.

The functionality of the generic data lock may be further understood through the use of the following pseudocode. For example, in one embodiment, the following data lock is set by the second application 112 during the performing of the service at step 304:

### object_1 (argument_1).

In the example, the setting at step 308 would then set the following generic lock:
argument_2 = concatenate (object_1) and (argument_1),
which concatenates object_1 and argument_1 to a new argument_2. This new argument_2 is then used to set the generic lock

### object_2 (argument_2).

Thus, in the example, argument_2 indicates both object_1 and argument_1. In this way, the setting of the generic lock locks against another user using the specific data lock obtained from the data lock log at step 306.

In one embodiment, the setting of the generic lock is performed by the execution controller 108. In another embodiment, the setting of the generic lock is performed by the execution controller 108 in combination with a global resource available to the software 100 in the computing environment 200, such as a server with which applications of the software 100 are capable of communicating. For example, in one embodiment, the setting of the generic lock comprises the execution controller 108 communicating with a server managing data locks. Such a server can be considered as a part of the database 116. In another embodiment, the setting of the generic lock is indicated in a memory accessible by all instances of the first application 104 running in any session, and in one version of such an embodiment, the memory comprises a random access memory.

In one embodiment in which the method 300 is implemented using the software 100 depicted in FIG. 1, the first application 104 and the execution controller 108 are associated with the first session, and the second application 112 and at least part of the lock tracking are associated with the second session. This exemplary delineation of instances of software applications and tasks between the first and second sessions can be further understood by the graphical depiction of FIG. 4. As depicted in FIG. 4, the first application 104 runs, receives the input at step 302, and invokes 404 the service through the execution controller 108 in association with the first session. Additionally, the setting of generic locks of step 308 occurs in association with the first session, for example by the execution controller 108 as shown in FIG. 4. The second application 112 performs the service, and sets 412 data locks in association with a session different than the first session (i.e. the second session, a third session or other sessions). As is depicted in FIG. 4, in one embodiment, some aspect of the tracking of data locks occurs in association with the second session. Furthermore, for each separately invoked service, the second application 112 performs the service and sets data locks in association with different sessions.

For example, in the embodiment depicted in FIG. 4, two separate services are invoked 404 through the execution controller 108, one resulting in a performance of a particular service in association with a second session, and the other resulting in a performance of a particular service in association with a third session. As is depicted in FIG. 4, the second session ends before the third session begins. FIG. 4 also depicts graphically along the timeline the relative durations of the data locks set by the second application 112 in association with the second and third sessions, and the generic locks set in association with the first session. The generic lock can be seen in FIG.4 to cover at least part of the interim between the second session and the third session. In one embodiment, this interim is part of an ongoing process related to the first application 104. Thus, in the embodiment of the method 300 depicted in FIG. 4, the first, second and third sessions are all associated with the first user, and the second and third sessions end before the first session. In the depicted embodiment, the method 300 further comprises deleting 416 the data lock set in the second session before deleting 432 the generic data lock, and setting 412 a second data lock in association with the third session before deleting 432 the generic data lock.

In one embodiment, the generic lock is an optimistic lock and the data lock set by the second application 112 is an exclusive data lock. One advantage to such an embodiment is that the generic locking behavior provided by the method 300 provides upgraded locking functionality relative to the data locking behavior of the second application 112. For example, the second application 112 is optionally a legacy application that only provides exclusive locking behavior, and it may be desirable to upgrade that behavior to provide optimistic locking behavior. An exclusive lock is associated with a specific user, grants write access to specific data for that specif ic user, and prevents other users from being granted write access to that specific data. An optimistic lock is also associated with a specific user, but grants a non-exclusive reservation on write access to the specific data for that specific user, and does not prevent other users from also being granted other non-exclusive reservations on write access to the specific data. An optimistic lock is capable of being converted to an exclusive lock for the specific user, at which point the converting cancels any other optimistic locks on the specific data associated with other users. In one embodiment, the second application 112 is not capable of setting optimistic locks, and the method 300 thereby associates optimistic locking behavior with the service performed by the second application.

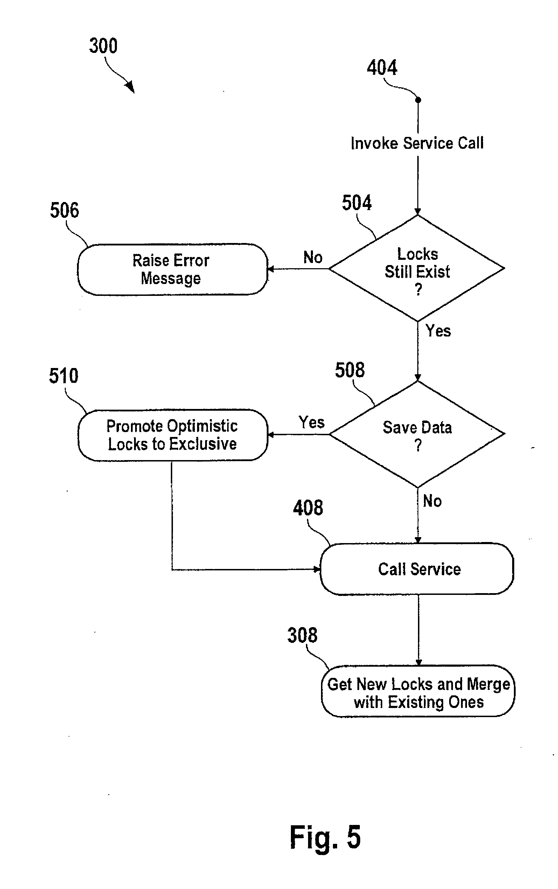

FIG. 5 depicts one scenario involving at least part of an embodiment of the method 300 in which the generic locks which are set by the method 300 are optimistic locks. The embodiment of the part of the method 300 depicted in FIG. 5 may overlap parts of the embodiment of the method 300 depicted in FIG. 3, and provide more detail in some aspects. As depicted in FIG. 5, at step 404 a service from the second application 112 is invoked through the execution controller 108 by the first application 104 for the first user. The scenario depicted in FIG. 5 accommodates the possibility that the first application 104 has previously invoked other services through the execution controller 108 as part of an ongoing process for the first user, and that optimistic locks may have been previously set in relation to the ongoing process. The depicted embodiment of the method 300 performs step 504 after step 404. At step 504, the execution controller 108 checks to make sure that all previously set optimistic locks associated with the ongoing process in the first application 104 are still available as optimistic locks to the ongoing process. If not, that means that some other process, possibly involving another user, has converted one of the previously set optimistic locks to an exclusive lock, and the optimistic lock previously set by the method 300 for the first user has been lost. In such an event, not all of the previously set optimistic locks still exist and the depicted embodiment of the method 300 proceeds to step 506 and raises an error message alerting the first user.

If all the previously set optimistic locks still exist, the depicted embodiment of the method 300 proceeds to step 508. At step 508, the execution controller 108 determines if the service invoked at step 404 involves saving data. If it does, the depicted embodiment of the method 300 proceeds to step 510. At step 510, the method 300 promotes the optimistic generic locks associated with the data to be saved to exclusive generic locks. This will also cancel any other optimistic generic locks associated with the specific data that may have been set by other users, such as by other users also using the first application 104. The depicted embodiment of the method 300 proceeds to step 408 after steps 510, and also upon a negative determination at step 508. At step 408, the execution controller 108 requests the service from the second application 112 which was invoked by the first application 104 at step 404. The depicted embodiment of the method 300 proceeds to step 308 after step 408. At step 308, the execution controller 108 sets any new generic locks that were obtained by the data lock log (at step 306, depicted in FIG. 3, for example). Step 308 of the method 300 optionally also comprises merging any new generic locks set at the step with any other generic locks previously set by the method 300 and associated with, for example, the ongoing process involving the first user and the first application 104.

In one embodiment, the method 300 accommodates the possibility that not all users may be using the first application 104 to access the services of the second application 112. For example, there may be a second user who directly initiates an instance of the second application 112 without using the first application 104 and the execution controller 108. In such a scenario, the second user may undesirably bypass the generic locking behavior provided by the method 300. For example, in one embodiment, it is the execution controller 108 which attempts to set a generic lock at step 308, and if such an attempt is denied because another user already has some type of exclusive lock on the data involved, the execution controller 108 will alert the first user. However, if a second user directly accesses the second application 112, the execution controller 108 will not provide the generic locking behavior for the second user, and will thus also not be able to deny the first user a generic lock if the second user has set an exclusive lock on to the data by directly accessing the second application 112. To accommodate this scenario, one embodiment of the method 300 provides a checksum functionality to attempt to determine if data has been modified by bypassing the generic locking behavior.

For every service request with a fixed position within a series of service requests, providing the same input data should return the same output data. If for a subsequent service request, the same output data is not returned for the same input data, the service is either not deterministic or data has changed and the second application 112 is working on outdated data. Thus, in one embodiment, the execution controller 108 creates a unique checksum, using an algorithm, for every service response. In one embodiment, the execution controller 108 uses a hash value algorithm to create the unique checksum. For example, an MD5 hash value algorithm, which has a fairly acceptable collision probability, can be used to generate the checksum. The algorithm is used to generate a checksum based on the input and output data, relative to the execution controller 108, related to the service request 408. If the series of service requests 408 is re-executed, the execution controller 108 compares the stored checksum for every service request 408 with the newly calculated one. If both checksums are equal, the execution controller 108 assumes that no data was changed in the meantime. If both checksums are not equal, data has changed.

As all services are effectively stateless, the data has to be changed on the database 116 and the user is working with outdated data. The execution controller 108 is able to identify the service and its position within the series of services and raise a corresponding message to the first application 104 or the first user. The first application 104 can ask the fist user to re-read data, continue anyway or cancel the first application 104.

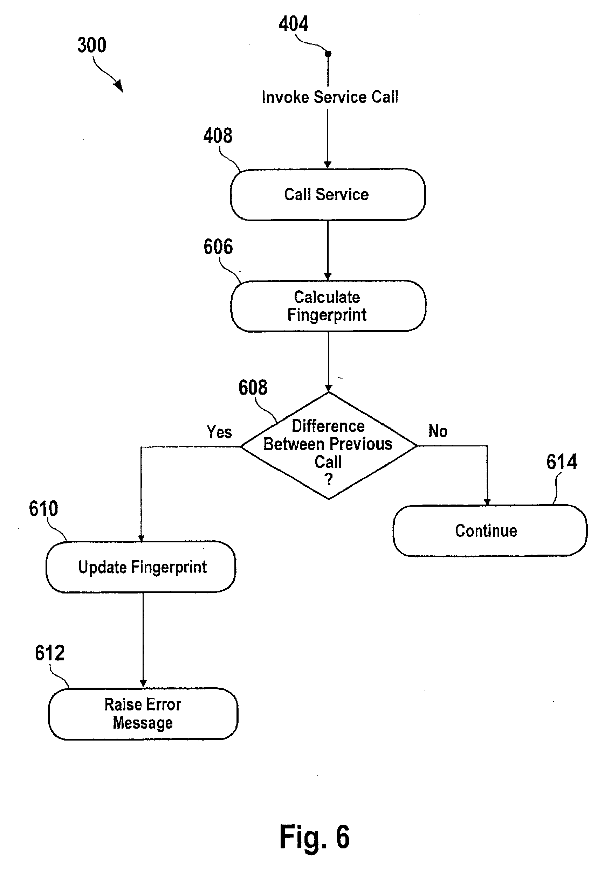

FIG. 6 depicts one scenario involving at least part of an embodiment of the method 300 in which the method 300 includes the checksum functionality. The embodiment of the part of the method 300 depicted in FIG. 6 may overlap parts of the embodiment of the method 300 depicted in FIG. 3, and provide more detail in some aspects. As depicted in FIG. 6, at step 404 a service from the second application 112 is invoked 404 by the first application 104. The depicted embodiment of the method 300 proceeds to step 408 after step 404. At step 408, the service is requested 408 from the second application 112 by the execution controller 108. The depicted embodiment of the method 300 proceeds to step 606 after step 408. At step 606, the checksum based on the input and output data related to the service is calculated. The depicted embodiment of the method 300 proceeds to step 608 after step 606.

At step 608, the method 300 determines if there is a difference between the checksum of the just-requested performance of the service in relation to the requested performance of the service most immediately-previous to the just-requested performance. If the determination is positive, the depicted embodiment of the method 300 proceeds to step 610 after step 608. At step 610, the method 300 updates the checksum of the just-requested service. The depicted embodiment of the method 300 proceeds to step 612 after step 610. At step 612, the execution controller 108 raises an error message to the first user indicating that the checksum has changed. If the determination is negative at step 608, the depicted embodiment of the method 300 proceeds to step 614. At step 614, the method 300 continues without raising an error message, for example allowing the first user to continue with the ongoing process in the first application 104.

In one embodiment, the software 100 comprises computer program instructions, which when executed by the processor 208, enable the performance of the method 300. For example, the computer program instructions of the software 100 optionally enable the automatic performance of the method 300. In one embodiment, the software 100 comprises computer program instructions, which when executed by the processor 208, and receive input from a user such as a human operator, enable the performance of the method 300. In one embodiment, a computer readable medium comprises the computer program instructions of the software 100, which when executed by the processor 208, enable the performance of the method 300. In one embodiment, a system comprises means to perform each of the steps of the method 300. For example, in one embodiment, the means to perform each of the steps of the method 300 comprise elements of the computing environment 200. Further embodiments are also possible, which are the result of variously combining steps, elements or embodiments described herein. For example, embodiments of the method 300 may include or exclude optional steps. Further embodiments, which would be disaernable based on the disclosure of the present Application, are also possible.

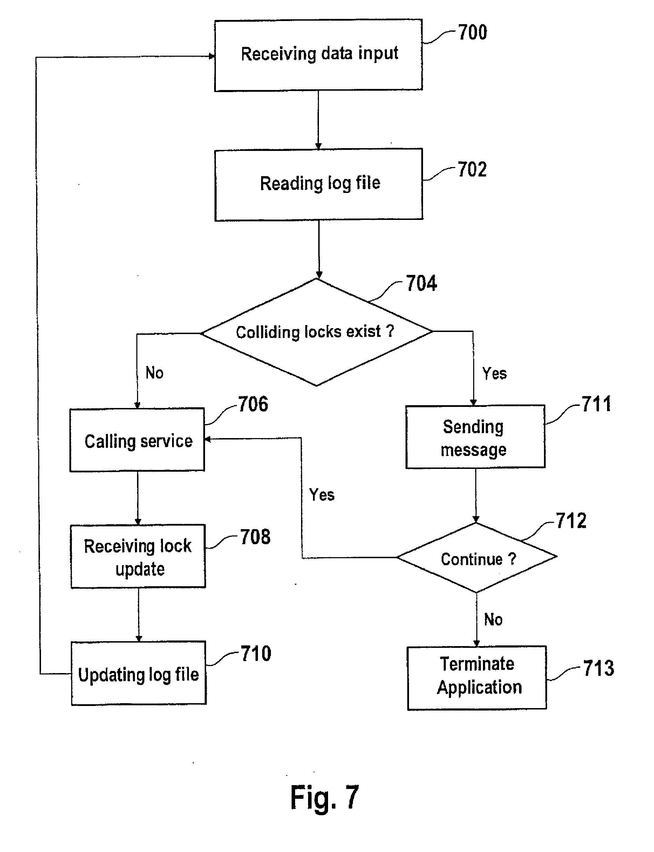

Fig. 7 shows a flowchart illustrating the method of managing a generic lock to a data object. In step 700, a data input is received by a current operation of a user interface of a first application, wherein the data input is related to a data object which is accessible by a service of a second application. In the present context, user interface can be understood as a graphical user interface, but it may be generally related to any kind of window of a graphical user interface or it may be related to a certain user, or to a certain process.

After having received the data input in step 700, a log file is read in step 702. The log file comprises information relating to a potentially present generic lock associated with the data object. In case in step 704 it is determined that the data object is already locked to another user interface which means that a colliding lock is existing, step 711 is carried out which sends a respective message to the user interface of the first application which tries to access the data object. Such a message may comprise information about the other user interface accessing the data object in parallel. This is followed by step 712 which might grant the user interface which likes to access the data object the possibility to continue with step 706 by calling the service, however in read only mode and with the danger that the data object is being modified until the said user interface requests the same service another time. Optionally the user may have the possibility to terminate the application with step 713. Optionally, after receiving the message in step 711 the user may select to continue working on another data object which means that the procedure is repeated with different data inputs starting again in step 700.

If step 704 returns that in the no generic data lock is blocking the access to the data object, the method continues after step 704 with step 706 by calling the service, which is followed by step 708. In step 708 an updated data lock associated with data object is received from the second application. This updated data lock is then used to update in step 710 the local log file. After step 710, the procedure Is repeated starting with step 700. In step 700, the user may select to work with the same service again which means that the lock to that certain data object related to that service is maintained throughout the upcoming steps 702 to 710. However, if the call in step 706 was a final call which for example finalized a certain transaction, updating the log file in step 710 may already have comprised the canceling of the lock to said certain data object, such that any other user interface would now be able to access said data object without any restrictions.

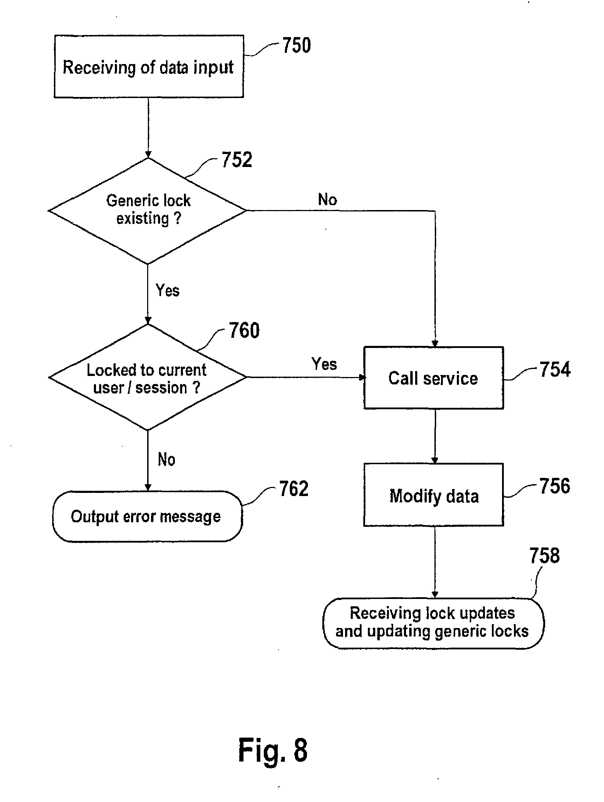

Fig. 8 shows a flowchart illustrating a method of managing an exclusive lock to a data object. Again, in step 750 a data input is received by a current session of the user interface of a first application. Thereby, the data input is received by a controller. This causes the controller in step 752 to check if a generic lock is existing which is associated with the data object. If step 752 returns that there is no generic lock existing, the procedure continues with step 754 which calls the service and optionally also allows in step 756 to modify data related to the data object. Thereupon, the procedure ends in step 758 with receiving lock updates from the second application and updating generic locks with respect to the data object at the controller.

If however step 752 returns that a generic lock is already existing, the controller determines in step 760 if the generic lock is associated for example with a current user or a current window of the user interface. If step 760 returns, that for e.g. a different user is already exclusively working with the data object, and the current user is not allowed to have write access to said data object. Therefore, in step 762 an error message is output to the respective user interface. This error message may comprise some optional actions a user could perform which may comprise a modification of the data input starting again from step 750 or a calling of the service in step 754 in a read only mode for the respective locked data object.

If however step 760 returns, that the existing generic lock is locked to the current user or to an ongoing session, the current user has the exclusive right to read and modify the respective data object. Therefore, after step 760 the step 754 comprising calling the service is performed which grants the user also the possibility to modify the data in step 756. The procedure is terminated in step 758 with receiving lock updates from the second application and updating generic locks at the controller.

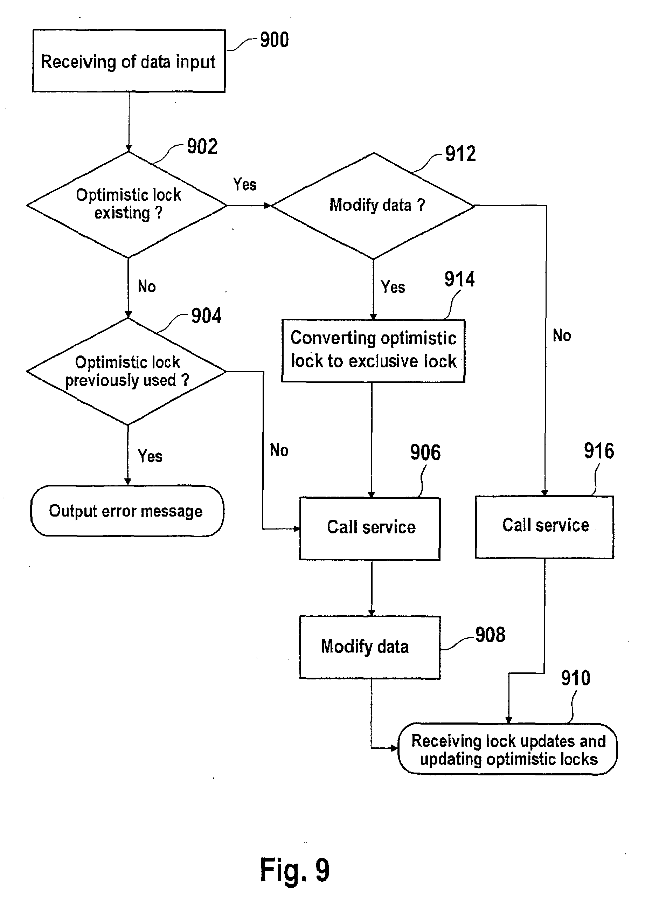

Fig. 9 shows a flowchart illustrating a method of managing an optimistic lock to a data object. In step 900, a data input is received, the data input being related to a data object, the data object being related to a service which is performable at a second application. A controller determines in step 902, if an optimistic lock is existing. If step 902 returns that such an optimistic lock is not existing and if the subsequent step 904 also returns, that an optimistic lock has not been previously used by the same user interface in a current operation of that user interface, no locks at all are existing for said data object. In order to clarify this point, current operation of the user interface has to be understood for example as an operation of the user interface during a certain time a user is continuously using the user interface, however with the restriction that during said operation the second application is only called discontinuously for performing certain services related to operation of said user interface.

Therefore, after step 904 step 906 with calling the service an optional step 908 with modifying of the data can be performed. Then the procedure ends in step 910 with receiving lock updates and updating of optimistic locks.

If step 902 returns that an optimistic lock is already existing it has to be determined in step 912, if a modification of the data object is necessary due to calling of the service of the second application. If such a data modification is not necessary a calling of the service can be performed by the controller in step 916, which ends with receiving lock updates and updating optimistic locks in step 910. However if step 912 returns that a data object modification has to be performed, in step 914 a conversion of the optimistic lock to an exclusive lock is performed. This allows the current user (interface) to exclusively modify the respective data object indirectly via the controller. Other users which previously were also granted an optimistic lock on the data object loose their optimistic locks immediately at step 914. This ensures, that after step 914 no other user interface is able to access and modify the respective data object. After step 914, in step 906 the service is called and in step 908 the data object is modified. The procedure ends with step 910 with receiving lock updates and updating optimistic locks.

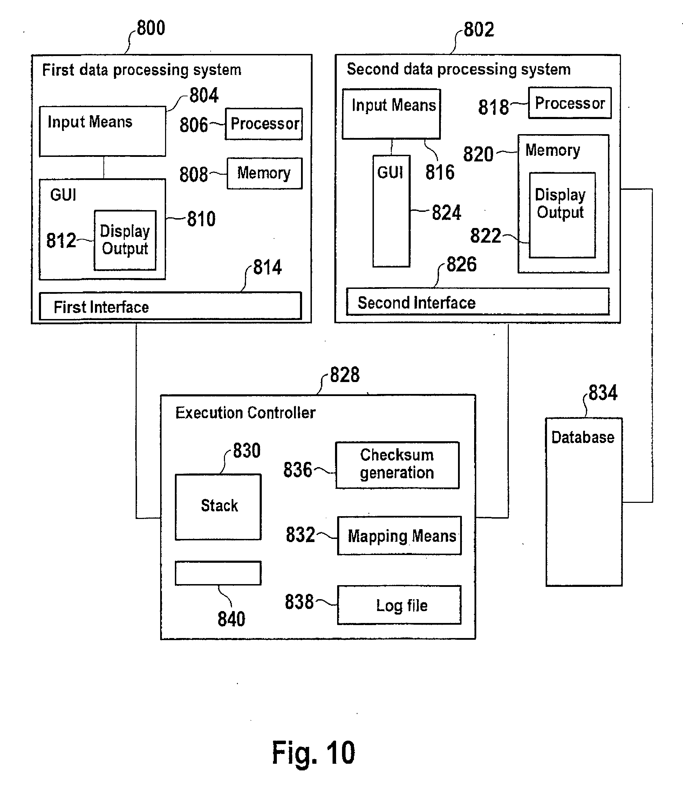

Fig. 10 shows a block diagram illustrating a data processing system according to the Invention. The data processing system comprises a first data processing system 800 and a second data processing system 802. The first data processing system 800 comprises a processor 806 adapted to execute computer executable instructions which may be comprised in a memory 808. In the embodiment of fig. 10, the memory 808 comprises a first application which Is executed by the first data processing system. The first data processing system further comprises input means 804 like for example a keyboard, mouse, haptic input means, input means relating to voice commands. The first data processing system 800 further comprises a graphical user interface 810 which Is adapted to provide a display output 812 to a user. The first data processing system 800 further comprises a first interface 814 adapted to communicate with an execution controller 828. Similarly to the first data processing system 800 the second data processing system 802 comprises input means 816, a processor 818 and a memory 820. In the memory 820, a second application is comprised which is executed by the second data processing system. The second data processing system 802 further comprises a graphical user interface 824 and a second interface 826.

The major difference between the first data processing system 800 and the second data processing system 802 is that the graphical user interface generated by the second application may for example be rather outdated, and a user uses the graphical user interface 810 generated by the first application 800 to retrieve data or in general display outputs 822 originally designated for the graphical user Interface 824 on its new graphical user interface 810. Thereby, the graphical user interface 810 compared to the graphical user interface 824 may possess a new design, new functionalities.

However, since a user will only access the first application via the input means 804, the first application needs to access the second application. This is done by a connection between the first interface 814 of the first data processing system and the second interface 826 of the second data processing system. Since the graphical user interface 810 with the display output 812 may comprise new functionalities, new design and therewith also rearrangement of the display outputs 822 originally designated for the graphical user interface 824, a mapping between data items of the display output 822 and the new display output 812 has to be performed. This is done by the execution controller 828 which is interposed in between the first interface 814 and the second interface 826.

The execution controller comprises mapping means 832 and a stack 830. The stack 830 has the purpose that all navigation steps and data input steps which are performed via the input means 804 at the first data processing system 800 are recorded by the execution controller 828, wherein for each new navigation input or data input the new input is added to the ordered stack 830. After each of the input steps the stack is passed from the execution controller 828 to the second interface 826 of the second data processing system 802.

The execution controller 828 further comprises a log file 838 and means 840 to call a service of the second application or sending a message to the graphical user interface 810 of the first application. When a user inputs data via the input means 804 to the graphical user interface 810, the input is received by the execution controller 828 and the log file 838 is read. Thereby, the log file comprises a list of generic data locks associated with data input or more specifically with the data object at the second application related to said data input. Depending on the content of the log file which means depending if a generic lock is present or not, the execution controller 828 may call the service at the second application using the means 840 or may signal a special message to the graphical user interface 810 informing the user interface that the data object he tries to access is currently locked due to a usage by for example another user interface.

Optionally the execution controller 828 further comprises means 836 for generating a checksum based on the user input received from the first data processing system 800 and a respective output of the second data processing system 802. If a certain input at the first data processing system 800 results the first time in a first output of the second data processing system 802 and the second time in a different second output than the first output, a change to a respective data object which was accessed via the second data processing system 802 by the second application due to the respective input has occurred. In this situation, the execution controller 828 sends a special signaling message to the graphical user interface 810 of the first application running at the first data processing system giving the user the opportunity to either continue with the modified data object or canceling his current access.

The second data processing system is adapted for 'dark processing', which has to be understood as a processing in such a way, that the user at the first data processing system 800 does not see the result of the processing, nor that the graphical user interface 810 with its display output 812 is necessarily updated by the end of the processing. For this purpose, the second interface 826 comprises a batch input functionality. A stack 830 can therewith be batch processed by the processor 818 of the second data processing system 802. After batch processing of the stack 830, by means of the second application the second data processing system 802 generates a respective display output 822.

Only after a respective command is sent from the input means 804 to the second data processing system 802, the stack 830 is processed in a final processing step such that the results generated by processing the stack 830 are written to a database 834 connected to the second data processing system 802. This is usually the point where changes to respective data objects occur. Depending if the user wants to continue with the modified data objects or if he chooses working with different data objects, a lock to the respective data object can be further maintained or deleted.

## Claims

1. A computer implemented method of coupling by a controller (108; 828) a first application program (104) running on a first data processing system (800) to a second application program (112) running on a second data processing system (802), the controller comprising a log file (838) for storing a plurality of generic data locks to data objects, the data objects being accessible by a plurality of services of the second application program (112), the method comprising:
- invoking by the controller (108; 828) the second application program (112) running on the second data processing system (802) from the first application program (104) running on the first data processing system (800),
- receiving by a current user input operation a data input via a user interface (810) of the first data processing system (800), the data input specifying at least one of the plurality of data objects and one service of the plurality of services,
- reading the log file (838),
- determining whether a colliding lock for the at least one of the plurality of data objects is comprised in the log file, wherein in case a colliding lock is determined a message is sent to the user interface (810) and wherein in case no colliding lock is determined the service is called,
- in response to calling the service, receiving an updated data lock associated with the data object from the second application program (112), and
updating the log file (838) with the received updated data lock,
wherein
the second application program (112) is setting locks and releasing all locks set before terminating, the method further comprising:
- activating tracking of all locks set (412) and released (416) by the second application program (112) before calling the second application by the controller,
- based on the locks set by the second application, the first application creating generic locks for all objects for which locks have been set by the second application, wherein before the first application ends, the generic locks created for all objects for which locks have been set by the second application are released,
- wherein the generic lock is an exclusive data lock associated with the current operation of the user interface (810),
- wherein the generic lock is an optimistic lock.

2. The method of claim 1, wherein
- in case no exclusive data lock is associated with the data object, calling the service,
- in case an exclusive data lock is associated with the data object and the exclusive data lock is further associated with the user interface (810), calling the service,
- in case an exclusive data lock is associated with the data object and the exclusive data lock is unassociated with the user interface (810), locking the data object and sending the message to the user interface (810).

3. The method of claim 1, wherein
- in case no optimistic data lock is associated with the data object and no optimistic data lock was associated with the data object in the current operation of the user interface (810), calling the service,
- in case no optimistic data lock is associated with the data object and an optimistic data lock was associated with the data object in the current operation of the user interface (810), sending the message to the user interface (810),
- in case an optimistic data lock is associated with the data object, calling the service.

4. The method of claim 3, wherein in case the optimistic lock is associated with the data object, granting a non-exclusive reservation on write access to the data object for the user interface (810), the optimistic lock not preventing other user interfaces (810) from being granted other non-exclusive reservations on write access to the data object, wherein the optimistic lock is capable of being converted to an exclusive lock, the converting comprising cancelling any other optimistic locks on the specific data by other users.

5. The method of any of the previous claims, wherein the generic data lock associated with the data object comprises a generic lock object and a generic lock argument, wherein the generic lock argument describes a second application (112) data lock object and a second application (112) data lock argument, wherein the second application (112) data lock object and the second application (112) data lock argument were received with the updated data lock associated with the data object from the second application (112).

6. The method of any of the previous claims, wherein the data object is comprised in a database (116; 834), wherein for accessing the data object a communication is performed between the second application (112) and the database (116; 834).

7. The method of any of the previous claims, wherein the generic lock type is independent of the second application (112) data lock type.

8. The method of any of the previous claims, wherein the second application (112) is used in an effectively stateless manner, the effectively stateless manner comprising initiating the second application (112) in response to the calling of the service and terminating the second application (112) before receiving any other service calls from the first application (104).

9. The method of any of the previous claims, wherein the first application (104) and the generic data lock are associated with a first session, the second application (112) and the second application (112) data lock are associated with a second session, the first and second sessions being associated with the user interface (810), the second session ending before the first session, the method further comprising deleting the second application (112) data lock before terminating the second application (112).

10. The method of any of the previous claims, further comprising:
- receiving an output of the second application (112) by the controller (108; 828) in response to calling the service,
- generating, by the controller (108; 828), a first checksum based on the data input received by the current session of the user interface (810) of the first application (104) and the received output,
- associating the first checksum with the called service and storing the associated first checksum;
- in case of calling the same service using the same data input again, generating, by the execution controller (108; 828), a second checksum based on said data input and the respective output received by calling the service using said data input and comparing the second checksum to the first checksum.

11. The method of claim 9, wherein in case the first and the second checksum are differing, sending a message to the user interface (810).

12. The method of any of the previous claims, wherein
- the user interface (810) of the first application (104) is a first graphical user interface (810),
- the second application (112) comprises a second graphical user interface (824) presentable on a display of the second application (112) for a users navigation through a number of display outputs (822) of the second application (112);
- the second application (112) further comprises a second interface (826), the second interface (826) comprising a batch input functionality, wherein said second interface is adapted to receive the call of the service, wherein the call of the service is comprised in a stack of action scripts specifying said navigation though the number of display outputs, wherein the second application (112) executes the stack of action scripts, wherein the execution of the stack is performed by batch processing;
- the first application (104) comprises a first interface (814), wherein the first interface (814) is adapted for communication with the second interface;
- the first application (104) further comprises the first graphical user interface (810) presentable on a display of the first application (104), wherein the display outputs of the second application (112) are mapped to the display outputs of the first application (104) by mapping means (832).

13. The method of claim 12, the method further comprising:
- receiving a navigation input by the first application (104), the navigation input specifying a users navigation from a current display output of the first application (104) to a next display output of the first application (104), wherein the current display output is mapped from a display output of the second application (112) to the display output of the first application (104) by the mapping means (832), wherein the specified users navigation involves the call of the service at the second application (112);
- adding an action script to an ordered stack (830) of action scripts maintained by the controller (108; 828), wherein the added action script corresponds to the navigation input, wherein the added action script is added last in the order of the ordered stack (830), wherein the added action script is unpopulated by data input;
- calling the service by providing the ordered stack (830) of action scripts to the second interface by the controller (108; 828) and executing the ordered stack (830) of action scripts by the second application (112) according to the order given by the ordered stack (830) of action scripts;
- mapping a display output of the second application (112) resulting from the execution of the ordered stack (830) to the next display output of the first application (104) by the mapping means (832);
- receiving a data input at the first graphical user interface (810), the data input being received with respect to said next display output;
- populating the added action script with said data input;
- providing the ordered stack (830) of action scripts comprising the populated action script to the second interface by the execution controller (108; 828);
- executing the ordered stack (830) of action scripts comprising the populated action script by the second application (112) according to the order given by the ordered stack (830) of action scripts;
- mapping a display output of the second application (112) resulting from the execution of the ordered stack (830) comprising the populated action script to a next consecutive display output of the first application (104) by the mapping means (832);
- repeating the previous steps until a stop command is received at the first graphical user interface (810) of the first application (104).

14. The method of claim 13, wherein in case it is not possible to populate the added action script with data input, the steps previous of receiving a data input are again performed.

15. A data processing system comprising a first application (104), a second application (112) and a controller (108; 828), the first application (104) comprising a user interface (810), the controller (108; 828) comprising:
- means for invoking by the controller (108; 828) the second application program (112) running on the second data processing system (802) from the first application program (104) running on the first data processing system (800),
- means for receiving a data input by a current operation of the user interface (810) of the first application (104), the data input being related to the data object, the data object being related to the service,
- means for reading a log file (838), the log file (838) comprising a generic data lock associated with the data object,
- means for calling the service and means for sending a message to the user interface (810),
- means for determining if the service is called or if a message is sent to the user interface (810), wherein the controller (108; 828) is adapted to, depending on the generic data lock, determining if the service is to be called or if a message is to be send to the user interface (810),
- means for receiving an updated data lock associated with the data object from the second application (112) in response to calling the service, and means for updating the log file (838) with the received updated data lock,
wherein
the second application is further adapted for setting locks and releasing all locks set before terminating, the system further comprising:
- means for activating tracking of all locks set by the second application before calling the second application by the controller,
- means for creating generic locks by the first application for all objects for which locks have been set by the second application, the means for creating generic locks being adapted for creating the generic locks based on the locks set by the second application with maintaining the generic locks only while the first application program is running,
- wherein the generic lock is an exclusive data lock associated with the current operation of the user interface (810),
- wherein the generic lock is an optimistic lock.

16. The system of claim 15, wherein the generic lock is an exclusive data lock associated with the current operation of the user interface (810), the system further comprising:
- means for locking the data object,
- means for sending a message to the user interface (810),
- means for determining if an exclusive data lock is associated with the data object,
- means for determining if the exclusive data lock is further associated with the user interface (810),
wherein the controller (108; 828) is adapted for
- calling the service in case no exclusive data lock is associated with the data object,
- calling the service in case an exclusive data lock is associated with the data object, wherein the exclusive data lock is further associated with the user interface (810),
- locking the data object and sending a message to the user interface (810) in case an exclusive data lock is associated with the data object, wherein the exclusive data lock is unassociated with the user interface (810).

17. the system of claim 15, wherein the generic lock is an optimistic lock, the controller (108; 828) further comprising:
- means for determining if an optimistic data lock is associated with the data object,
wherein the controller (108; 828) is adapted for
- calling the service in case no optimistic data lock is associated with the data object and no optimistic data lock was associated with the data object in the current operation of the user interface (810),
- sending a message to the user interface (810) in case no optimistic data lock is associated with the data object and an optimistic data lock was associated with the data object in the current operation of the user interface (810),
- calling the service in case an optimistic data lock is associated with the data object.

18. The system of claim 17, further comprising
- means for granting a non-exclusive reservation on write access to the data object for the user interface (810),
- means for converting an optimistic lock to an exclusive lock,
wherein the controller (108; 828) is further adapted to grant a non-exclusive reservation on write access to the data object for the user interface (810) in case the optimistic lock is associated with the data object, the optimistic lock not preventing other user interfaces (810) from being granted other non-exclusive reservations on write access to the data object, wherein the optimistic lock is capable of being converted to an exclusive lock, the converting comprising canceling any other optimistic locks on the specific data by other users.

19. The system of any of the previous claims 15 to 18, further comprising a database (116; 834).

20. The system of any of the previous claims 15 to 19, wherein the second application (112) is adapted to be used in an effectively stateless manner.

21. The system of any of the previous claims 15 to 20, further comprising:
- means for receiving an output of the second application (112) by the controller (108; 828) in response to calling the service,
- means (836) for generating, by the controller (108; 828), a first checksum based on the data input received by the current session of the user interface (810) of the first application (104) and the received output,
- means for associating the first checksum with the called service and storing the associated first checksum;
- means (836) for generating, in case of calling the same service using the same data input again, a second checksum based on said data input and the respective output received by calling the service using said data input and
- means for comparing the second checksum to the first checksum.

22. The system of claim 21, further comprising means for sending a message to the user interface (810) in case the first and the second checksum are differing.

23. The system of any of the previous claims 15 to 22, wherein
- the user interface of the first application (104) is a first graphical user interface (810),
- the second application (112) comprises a second graphical user interface (824) presentable on a display of the second application (112) for a users navigation through a number of display outputs of the second application (112);
- the second application (112) further comprises a second interface, the second interface comprising a batch input functionality, wherein said second interface is adapted to receive the call of the service, wherein the call of the service is comprised in a stack (830) of action scripts specifying said navigation though the number of display outputs, wherein the second application (112) executes the stack (830) of action scripts, wherein the execution of the stack (830) is performed by batch processing;
- the first applicafiion (104) comprises a first interface, wherein the first interface is adapted for communication with the second interface;
- the first application (104) further comprises the first graphical user interface (810) presentable on a display of the first application (104), wherein the display outputs of the second application (112) are mapped to the display outputs of the first application (104) by mapping means (832).

24. The system of claim 23, further comprising:
- means for receiving a navigation input by the first application (104), the navigation input specifying a users navigation from a current display output of the first application (104) to a next display output of the first application (104), wherein the current display output is mapped from a display output of the second application (112) to the display output of the first application (104) by the mapping means (832), wherein the specified users navigation involves the call of the service at the second application (112);
- means for adding an action script to an ordered stack (830) of action scripts maintained by the controller (108; 828), wherein the added action script corresponds to the navigation input, wherein the added action script is added last in the order of the ordered stack (830), wherein the added action script is unpopulated by data input;
- means for calling the service by providing the ordered stack (830) of action scripts to the second interface by the controller (108; 828) and executing the ordered stack (830) of action scripts by the second application (112) according to the order given by the ordered stack (830) of action scripts;
- means (832) for mapping a display output of the second application (112) resulting from the execution of the ordered stack (830) to the next display output of the first application (104) by the mapping means (832);
- means for receiving a data input at the first graphical user interface (810), the data input being received with respect to said next display output;
- means for populating the added action script with said data input;
- means for providing the ordered stack (830) of action scripts comprising the populated action script to the second interface by the execution controller (108; 828);
- means for executing the ordered stack (830) of action scripts comprising the populated action script by the second application (112) according to the order given by the ordered stack (830) of action scripts;
- means (832) for mapping a display output of the second application (112) resulting from the execution of the ordered stack (830) comprising the populated action script to a next consecutive display output of the first application (104) by the mapping means (832);
- means for repeating the previous steps until a stop command is received at the first graphical user interface (810) of the first application (104).

25. The system of claim 24, further comprising means for performing again the steps previous of receiving a data input in case it is not possible to populate the added action script with data input.

## Patentansprüche

1. Computerimplementiertes Verfahren zum Koppeln durch einen Controller (108; 828) eines ersten Anwendungsprogramms (104), das in einem ersten Datenverarbeitungssystem (800) läuft, mit einem zweiten Anwendungsprogramm (112), das in einem zweiten Datenverarbeitungssystem (802) läuft, wobei der Controller eine Protokolldatei (838) zum Speichern von mehreren generischen Datensperren zu Datenobjekten aufweist, wobei von mehreren Diensten des zweiten Anwendungsprogramms (112) auf die Datenobjekte zugegriffen werden kann, wobei das Verfahren Folgendes aufweist:
- Aufrufen des zweiten Anwendungsprogramms (112), das in dem zweiten Datenverarbeitungssystem (802) läuft, aus dem ersten Anwendungsprogramm (104), das in dem ersten Datenverarbeitungssystem (800) läuft, durch den Controller (108; 828),
- Empfangen einer Dateneingabe über eine Benutzerschnittstelle (810) des ersten Datenverarbeitungssystems (800) durch einen aktuellen Benutzereingabevorgang, wobei die Dateneingabe wenigstens eines der mehreren Datenobjekte und einen Dienst der mehreren Dienste vorgibt,
- Lesen der Protokolldatei (838),
- Ermitteln, ob in der Protokolldatei eine kollidierende Sperre für das wenigstens eine der mehreren Datenobjekte enthalten ist, wobei, falls eine kollidierende Sperre ermittelt wird, eine Nachricht an die Benutzerschnittstelle (810) gesendet wird, und wobei, falls keine kollidierende Sperre ermittelt wird, der Dienst aufgerufen wird,
- als Reaktion auf das Aufrufen des Dienstes Empfangen einer aktualisierten Datensperre, die dem Datenobjekt zugeordnet ist, von dem zweiten Anwendungsprogramm (112) und Aktualisieren der Protokolldatei (838) mit der empfangenen aktualisierten Datensperre,
wobei
das zweite Anwendungsprogramm (112) Sperren setzt und alle gesetzten Sperren vor der Beendung aufhebt, wobei das Verfahren ferner Folgendes aufweist:
- Aktivieren einer Verfolgung aller von dem zweiten Anwendungsprogramm (112) gesetzten (412) und aufgehobenen (416) Sperren vor Aufrufen der zweiten Anwendung durch den Controller,
- auf der Basis der von der zweiten Anwendung gesetzten Sperren, Erzeugen durch die erste Anwendung von generischen Sperren für alle Objekte, für die von der zweiten Anwendung Sperren gesetzt wurden, wobei vor Ende der ersten Anwendung die generischen Sperren, die für alle Objekte gesetzt wurden, für die von der zweiten Anwendung Sperren gesetzt wurden, aufgehoben werden,
- wobei die generische Sperre eine exklusive Datensperre ist, die dem aktuellen Betrieb der Benutzerschnittstelle (810) zugeordnet ist,
- wobei die generische Sperre eine optimistische Sperre ist.

2. Verfahren nach Anspruch 1, wobei
- falls dem Datenobjekt keine exklusive Datensperre zugeordnet ist ist, Aufrufen des Dienstes,
- falls dem Datenobjekt eine exklusive Datensperre zugeordnet ist und die exklusive Datensperre ferner der Benutzerschnittstelle (810) zugeordnet ist, Aufrufen des Dienstes,
- falls dem Datenobjekt eine exklusive Datensperre zugeordnet ist und die exklusive Datensperre der Benutzerschnittstelle (810) nicht zugeordnet ist, Sperren des Datenobjekts und Senden der Nachricht an die Benutzerschnittstelle (810).

3. Verfahren nach Anspruch 1, wobei
- falls dem Datenobjekt keine optimistische Datensperre zugeordnet ist und im aktuellen Betrieb der Benutzerschnittstelle (810) dem Datenobjekt keine optimistische Datensperre zugeordnet war, Aufrufen des Dienstes,
- falls dem Datenobjekt keine optimistische Datensperre zugeordnet ist und im aktuellen Betrieb der Benutzerschnittstelle (810) dem Datenobjekt eine optimistische Datensperre zugeordnet war, Senden der Nachricht an die Benutzerschnittstelle (810),
- falls dem Datenobjekt eine optimistische Datensperre zugeordnet ist, Aufrufen des Dienstes.

4. Verfahren nach Anspruch 3, wobei, falls die optimistische Datensperre dem Datenobjekt zugeordnet ist, Gewähren einer nicht-exklusiven Reservierung des Schreibzugriffs auf das Datenobjekt für die Benutzerschnittstelle (810), wobei die optimistische Sperre andere Benutzerschnittstellen (810) nicht davon abhält, andere nicht-exklusive Reservierungen des Schreibzugriffs auf das Datenobjekt gewährt zu bekommen, wobei die optimistische Sperre in eine exklusive Sperre umgewandelt werden kann, wobei die Umwandlung das Aufheben aller weiteren optimistischen Sperren auf den spezifischen Daten von anderen Benutzern umfasst.

5. Verfahren nach einem der vorhergehenden Ansprüche, wobei die dem Datenobjekt zugeordnete generische Datensperre ein generisches Sperrobjekt und ein generisches Sperrargument aufweist, wobei das generische Sperrargument ein Datensperrobjekt der zweiten Anwendung (112) und ein Datensperrargument der zweiten Anwendung (112) beschreibt, wobei das Datensperrobjekt der zweiten Anwendung (112) und das Datensperrargument der zweiten Anwendung (112) mit der aktualisierten Datensperre, die dem Datenobjekt zugeordnet ist, von der zweiten Anwendung (112) empfangen wurden.

6. Verfahren nach einem der vorhergehenden Ansprüche, wobei das Datenobjekt in einer Datenbank (116; 834) enthalten ist, wobei für einen Zugriff auf das Datenobjekt eine Kommunikation zwischen der zweiten Anwendung (112) und der Datenbank (116; 834) durchgeführt wird.

7. Verfahren nach einem der vorhergehenden Ansprüche, wobei der generische Sperrentyp von dem Datensperrentyp der zweiten Anwendung (112) unabhängig ist.

8. Verfahren nach einem der vorhergehenden Ansprüche, wobei die zweite Anwendung (112) auf eine effektiv zustandslose Weise verwendet wird, wobei die effektive zustandslose Weise das Einleiten der zweiten Anwendung (112) als Reaktion auf das Aufrufen des Dienstes und Beenden der zweiten Anwendung (112) vor Empfangen weiterer Dienstaufrufe von der ersten Anwendung (104) aufweist.

9. Verfahren nach einem der vorhergehenden Ansprüche, wobei die erste Anwendung (104) und die generische Datensperre einer ersten Sitzung zugeordnet werden, die zweite Anwendung (112) und die Datensperre der zweiten Anwendung (112) einer zweiten Sitzung zugeordnet werden, wobei die erste und die zweite Sitzung der Benutzerschnittstelle (810) zugeordnet sind, wobei die zweite Sitzung vor der ersten Sitzung endet, wobei das Verfahren ferner das Löschen der Datensperre der zweiten Anwendung (112) vor Beendung der zweiten Anwendung (112) aufweist.

10. Verfahren nach einem der vorhergehenden Ansprüche, das ferner Folgendes aufweist:
- Empfangen einer Ausgabe der zweiten Anwendung (112) durch den Controller (108; 828) als Reaktion auf Aufrufen des Dienstes,
- Erzeugen, einer ersten Prüfsumme, die auf der von der aktuellen Sitzung der Benutzerschnittstelle (810) der ersten Anwendung (104) empfangenen Dateneingabe und der empfangenen Ausgabe basiert, durch den Controller (108; 828),
- Zuordnen der ersten Prüfsumme mit dem aufgerufenen Dienst und Speichern der zugeordneten ersten Prüfsumme,
- falls derselbe Dienst mithilfe derselben Dateneingabe erneut aufgerufen wird, Erzeugen, durch den Ausführungs-Controller (108; 828), einer zweiten Prüfsumme, die auf der genannten Dateneingabe und der jeweiligen empfangenen Ausgabe basiert, durch Aufrufen des Dienstes mithilfe der genannten Dateneingabe und Vergleichen der zweiten Prüfsumme mit der ersten Prüfsumme.

11. Verfahren nach Anspruch 9, wobei, falls die erste und die zweite Prüfsumme verschieden sind, eine Nachricht an die Benutzerschnittstelle (810) gesendet wird.

12. Verfahren nach einem der vorhergehenden Ansprüche, wobei
- die Benutzerschnittstelle (810) der ersten Anwendung (104) eine erste grafische Benutzeroberfläche (810) ist,
- die zweite Anwendung (112) eine zweite grafische Benutzeroberfläche (824) aufweist, die auf einer Anzeige der zweiten Anwendung (112) zur Benutzernavigation durch eine Anzahl von Anzeigeausgaben (822) der zweiten Anwendung (112) darstellbar ist,
- die zweite Anwendung (112) ferner eine zweite Schnittstelle (826) aufweist, die zweite Schnittstelle (826) eine Batch-Input-Funktionalität aufweisend, wobei die genannte zweite Schnittstelle zum Empfangen des Aufrufs des Dienstes ausgeführt ist, wobei der Aufruf des Dienstes in einem Stapel von Aktionsskripten enthalten ist, der die genannte Navigation durch die Anzahl von Anzeigeausgaben vorgibt, wobei die zweite Anwendung (112) den Stapel von Aktionsskripten ausführt, wobei die Ausführung des Stapels durch Stapelverarbeitung durchgeführt wird,
- die erste Anwendung (104) eine erste Schnittstelle (814) aufweist, wobei die erste Schnittstelle (814) zur Kommunikation mit der zweiten Schnittstelle ausgeführt ist,
- die erste Anwendung (104) ferner die erste grafische Benutzeroberfläche (810) aufweist, die auf einer Anzeige der ersten Anwendung (104) darstellbar ist, wobei die Anzeigeausgaben der zweiten Anwendung (112) durch Abbildungsmittel (832) auf die Anzeigeausgaben der ersten Anwendung (104) abgebildet werden.

13. Verfahren nach Anspruch 12, wobei das Verfahren ferner Folgendes aufweist:
- Empfangen einer Navigationseingabe durch die erste Anwendung (104), wobei die Navigationseingabe eine Benutzernavigation von einer aktuellen Anzeigeausgabe der ersten Anwendung (104) zu einer nächsten Anzeigeausgabe der ersten Anwendung (104) vorgibt, wobei die aktuelle Anzeigeausgabe von einer Anzeigeausgabe der zweiten Anwendung (112) durch das Abbildungsmittel (832) auf die Anzeigeausgabe der ersten Anwendung (104) abgebildet wird, wobei die vorgegebene Benutzernavigation den Aufruf des Dienstes bei der zweiten Anwendung (112) beinhaltet,
- Hinzufügen eines Aktionsskripts zu einem geordneten Stapel (830) von Aktionsskripten, der von dem Controller (108; 828) gepflegt wird, wobei das hinzugefügte Aktionsskript der Navigationseingabe entspricht, wobei das hinzugefügte Aktionsskript in der Reihenfolge des geordneten Stapels (830) als letztes eingefügt wird, wobei das hinzugefügte Aktionsskript durch Dateneingabe geleert wird,
- Aufrufen des Dienstes durch Geben des geordneten Stapels (840) von Aktionsskripten an die zweite Schnittstelle durch den Controller (108; 828) und Ausführen des geordneten Stapels (830) von Aktionsskripten durch die zweite Anwendung (112) gemäß der von dem geordneten Stapel (830) von Aktionsskripten bestimmten Reihenfolge,
- Abbilden einer Anzeigeausgabe der zweiten Anwendung (112), die sich aus der Ausführung des geordneten Stapels (830) ergibt, durch das Abbildungsmittel (832) auf die nächste Anzeigeausgabe der ersten Anwendung (104),
- Empfangen einer Dateneingabe an der ersten grafischen Benutzeroberfläche (810), wobei die Dateneingabe in Bezug auf die genannte nächste Anzeigeausgabe empfangen wird,
- Befüllen des hinzugefügten Aktionsskripts mit der genannten Dateneingabe,
- Geben des geordneten Stapels (830) von Aktionsskripten, der den befüllten Aktionsskript aufweist, an die zweite Schnittstelle durch den Ausführungs-Controller (108; 828),
- Ausführen des geordneten Stapels (830) von Aktionsskripten, der das befüllte Aktionsskript aufweist, durch die zweite Anwendung (112) gemäß der von dem geordneten Stapel (830) von Aktionsskripten bestimmten Reihenfolge,
- Abbilden einer Anzeigeausgabe der zweiten Anwendung (112), die sich aus der Ausführung des geordneten Stapels (830), der das befüllte Aktionsskript aufweist, ergibt, durch das Abbildungsmittel (832) auf eine nächste nachfolgende Anzeigeausgabe der ersten Anwendung (104),
- Wiederholen der vorhergehenden Schritte, bis an der ersten grafischen Benutzeroberfläche (810) der ersten Anwendung (104) ein Stopp-Befehl empfangen wird.

14. Verfahren nach Anspruch 13, wobei, falls es nicht möglich ist, das hinzugefügte Aktionsskript mit Dateneingabe zu befüllen, die Schritte vor dem Empfangen einer Dateneingabe erneut durchgeführt werden.

15. Datenverarbeitungssystem, umfassend eine erste Anwendung (104), eine zweite Anwendung (112) und einen Controller (108; 828), wobei die erste Anwendung (104) eine Benutzerschnittstelle (810) aufweist, wobei der Controller (108; 828) Folgendes aufweist:
- Mittel zum Aufrufen des zweiten Anwendungsprogramms (112), das in dem zweiten Datenverarbeitungssystem (802) läuft, aus dem ersten Anwendungsprogramm (104), das in dem ersten Datenverarbeitungssystem (800) läuft, durch den Controller (108; 828),
- Mittel zum Empfangen einer Dateneingabe durch einen aktuellen Vorgang der Benutzerschnittstelle (810) der ersten Anwendung (104), wobei die Dateneingabe mit dem Datenobjekt in Beziehung steht, wobei das Datenobjekt mit dem Dienst in Beziehung steht,
- Mittel zum Lesen einer Protokolldatei (838), wobei die Protokolldatei (838) eine generische Datensperre aufweist, die mit dem Datenobjekt in Beziehung steht,
- Mittel zum Aufrufen des Dienstes und Mittel zum Senden einer Nachricht an die Benutzerschnittstelle (810),
- Mittel zum Ermitteln, ob der Service aufgerufen wird oder ob eine Nachricht an die Benutzerschnittstelle (810) gesendet wird, wobei der Controller (108; 828) ausgeführt ist, um in Abhängigkeit von der generischen Datensperre zu ermitteln, ob der Dienst aufzurufen ist oder ob eine Nachricht an die Benutzerschnittstelle (810) zu senden ist,
- Mittel zum Empfangen einer aktualisierten Datensperre, die dem Datenobjekt zugeordnet ist, von der zweiten Anwendung (112) als Reaktion auf das Aufrufen des Dienstes und
- Mittel zum Aktualisieren der Protokolldatei (838) mit der empfangenen aktualisierten Datensperre,
wobei
die zweite Anwendung ferner ausgeführt ist, um Sperren zu setzen und alle gesetzten Sperren vor der Beendung aufzuheben, wobei das Verfahren ferner Folgendes aufweist:
- Mittel zum Aktivieren der Verfolgung aller von der zweiten Anwendung gesetzten Sperren vor Aufrufen der zweiten Anwendung durch den Controller,
- Mittel zum Erzeugen von generischen Sperren durch die erste Anwendung für alle Objekte, für die von der zweiten Anwendung Sperren gesetzt wurden, wobei das Mittel zum Erzeugen von generischen Sperren ausgeführt ist zum Erzeugen der generischen Sperren auf der Basis der von der zweiten Anwendung gesetzten Sperren, wobei die generischen Sperren nur aufrecht erhalten werden, während das erste Anwendungsprogramm läuft,
- wobei die generische Sperre eine exklusive Datensperre ist, die dem aktuellen Betrieb der Benutzerschnittstelle (810) zugeordnet ist,
- wobei die generische Sperre eine optimistische Sperre ist.

16. System nach Anspruch 15, wobei die generische Sperre eine exklusive Datensperre ist, die dem aktuellen Betrieb der Benutzerschnittstelle (810) zugeordnet ist, wobei das System ferner Folgendes aufweist:
- Mittel zum Sperren des Datenobjekts,
- Mittel zum Senden einer Nachricht an die Benutzerschnittstelle (810).
- Mittel zum Ermitteln, ob dem Datenobjekt eine exklusive Datensperre zugeordnet ist,
- Mittel zum Ermitteln, ob die exklusive Datensperre ferner der Benutzerschnittstelle (810) zugeordnet ist,
wobei der Controller (108; 828) ausgeführt ist zum
- Aufrufen des Dienstes, falls dem Datenobjekt keine exklusive Datensperre zugeordnet ist,
- Aufrufen des Dienstes, falls dem Datenobjekt eine exklusive Datensperre zugeordnet ist, wobei die exklusive Datensperre ferner der Benutzerschnittstelle (810) zugeordnet ist,
- Sperren des Datenobjekts und Senden einer Nachricht an die Benutzerschnittstelle (810), falls dem Datenobjekt eine exklusive Datensperre zugeordnet ist, wobei die exklusive Datensperre der Benutzerschnittstelle (810) nicht zugeordnet ist.

17. System nach Anspruch 15, wobei die generische Sperre eine optimistische Sperre ist, wobei der Controller (108; 828) ferner Folgendes aufweist:
- Mittel zum Ermitteln, ob dem Datenobjekt eine optimistische Datensperre zugeordnet ist,
wobei der Controller (108; 828) ausgeführt ist zum
- Aufrufen des Dienstes, falls dem Datenobjekt keine optimistische Datensperre zugeordnet ist und im aktuellen Betrieb der Benutzerschnittstelle (810) dem Datenobjekt keine optimistische Datensperre zugeordnet war,
- Senden einer Nachricht an die Benutzerschnittstelle (810), falls dem Datenobjekt keine optimistische Datensperre zugeordnet ist und im aktuellen Betrieb der Benutzerschnittstelle (810) dem Datenobjekt eine optimistische Datensperre zugeordnet war,
- Aufrufen des Dienstes, falls dem Datenobjekt eine optimistische Datensperre zugeordnet ist.

18. System nach Anspruch 17, das ferner Folgendes aufweist
- Mittel zum Gewähren einer nicht-exklusiven Reservierung des Schreibzugriffs auf das Datenobjekt für die Benutzerschnittstelle (810),
- Mittel zum Umwandeln einer optimistischen Sperre in eine exklusive Sperre,
wobei der Controller (108; 828) ferner ausgeführt ist, um eine nicht-exklusive Reservierung des Schreibzugriffs auf das Datenobjekt für die Benutzerschnittstelle (810) zu gewähren, falls die optimistische Sperre dem Datenobjekt zugeordnet ist, wobei die optimistische Sperre andere Benutzerschnittstellen (810) nicht davon abhält, andere nicht-exklusive Reservierungen des Schreibzugriffs auf das Datenobjekt gewährt zu bekommen, wobei die optimistische Sperre in eine exklusive Sperre umgewandelt werden kann, wobei die Umwandlung das Aufheben aller weiteren optimistischen Sperren auf den spezifischen Daten von anderen Benutzern umfasst.

19. System nach einem der vorhergehenden Ansprüche 15 bis 18, das ferner eine Datenbank (116; 834) aufweist.

20. System nach einem der vorherigen Ansprüche 15 bis 19, wobei die zweite Anwendung (112) ausgeführt ist, um auf eine effektiv zustandslose Weise verwendet zu werden.

21. System nach einem der vorherigen Ansprüche 15 bis 20, das ferner Folgendes aufweist:
- Mittel zum Empfangen einer Ausgabe der zweiten Anwendung (112) durch den Controller (108; 828) als Reaktion auf Aufrufen des Dienstes,
- Mittel (836) zum Erzeugen einer ersten Prüfsumme, die auf der von der aktuellen Sitzung der Benutzerschnittstelle (810) der ersten Anwendung (104) empfangenen Dateneingabe und der empfangenen Ausgabe basiert, durch den Controller (108; 828),
- Mittel zum Zuordnen der ersten Prüfsumme zu dem aufgerufenen Dienst und Speichern der zugeordneten ersten Prüfsumme,
- Mittel (836) zum Erzeugen, falls derselbe Dienst mithilfe derselben Dateneingabe erneut aufgerufen wird, einer zweiten Prüfsumme, die auf der genannten Dateneingabe und der jeweiligen empfangenen Ausgabe basiert, durch Aufrufen des Dienstes mithilfe der genannten Dateneingabe und
- Mittel zum Vergleichen der zweiten Prüfsumme mit der ersten Prüfsumme.

22. System nach Anspruch 21, das ferner Mittel zum Senden einer Nachricht an die Benutzerschnittstelle (810) aufweist, falls die erste und die zweite Prüfsumme verschieden sind.

23. System nach einem der vorhergehenden Ansprüche 15 bis 22, wobei
- die Benutzerschnittstelle der ersten Anwendung (104) eine erste grafische Benutzeroberfläche (810) ist,
- die zweite Anwendung (112) eine zweite grafische Benutzeroberfläche (824) aufweist, die auf einer Anzeige der zweiten Anwendung (112) zur Benutzernavigation durch eine Anzahl von Anzeigeausgaben (822) der zweiten Anwendung (112) darstellbar ist,
- die zweite Anwendung (112) ferner eine zweite Schnittstelle (826) aufweist, die zweite Schnittstelle (826) eine Batch-Input-Funktionalität aufweisend, wobei die genannte zweite Schnittstelle zum Empfangen des Aufrufs des Dienstes ausgeführt ist, wobei der Aufruf des Dienstes in einem Stapel (830) von Aktionsskripten enthalten ist, der die genannte Navigation durch die Anzahl von Anzeigeausgaben vorgibt, wobei die zweite Anwendung (112) den Stapel (830) von Aktionsskripten ausführt, wobei die Ausführung des Stapels (830) durch Stapelverarbeitung durchgeführt wird,
- die erste Anwendung (104) eine erste Schnittstelle aufweist, wobei die erste Schnittstelle zur Kommunikation mit der zweiten Schnittstelle ausgeführt ist,
- die erste Anwendung (104) ferner die erste grafische Benutzeroberfläche (810) aufweist, die auf einer Anzeige der ersten Anwendung (104) darstellbar ist, wobei die Anzeigeausgaben der zweiten Anwendung (112) durch Abbildungsmittel (832) auf die Anzeigeausgaben der ersten Anwendung (104) abgebildet werden.

24. System nach Anspruch 23, das ferner Folgendes aufweist:
- Mittel zum Empfangen einer Navigationseingabe durch die erste Anwendung (104), wobei die Navigationseingabe eine Benutzernavigation von einer aktuellen Anzeigeausgabe der ersten Anwendung (104) zu einer nächsten Anzeigeausgabe der ersten Anwendung (104) vorgibt, wobei die aktuelle Anzeigeausgabe von einer Anzeigeausgabe der zweiten Anwendung (112) durch das Abbildungsmittel (832) auf die Anzeigeausgabe der ersten Anwendung (104) abgebildet wird, wobei die vorgegebene Benutzernavigation den Aufruf des Dienstes bei der zweiten Anwendung (112) beinhaltet,
- Mittel zum Hinzufügen eines Aktionsskripts zu einem geordneten Stapel (830) von Aktionsskripten, der von dem Controller (108; 828) gepflegt wird, wobei das hinzugefügte Aktionsskript der Navigationseingabe entspricht, wobei das hinzugefügte Aktionsskript in der Reihenfolge des geordneten Stapels (830) zuletzt eingefügt wird, wobei das hinzugefügte Aktionsskript durch Dateneingabe geleert wird,
- Mittel zum Aufrufen des Dienstes durch Geben des geordneten Stapels (840) von Aktionsskripten an die zweite Schnittstelle durch den Controller (108; 828) und Ausführen des geordneten Stapels (830) von Aktionsskripten durch die zweite Anwendung (112) gemäß der von dem geordneten Stapel (830) von Aktionsskripten bestimmten Reihenfolge,
- Mittel (832) zum Abbilden einer Anzeigeausgabe der zweiten Anwendung (112), die sich aus der Ausführung des geordneten Stapels (830) ergibt, durch das Abbildungsmittel (832) auf die nächste Anzeigeausgabe der ersten Anwendung (104),
- Mittel zum Empfangen einer Dateneingabe an der ersten grafischen Benutzeroberfläche (810), wobei die Dateneingabe in Bezug auf die genannte nächste Anzeigeausgabe empfangen wird,
- Mittel zum Befüllen des hinzugefügten Aktionsskripts mit der genannten Dateneingabe,
- Mittel zum Geben des geordneten Stapels (830) von Aktionsskripten, der den befüllten Aktionsskript aufweist, an die zweite Schnittstelle durch den Ausführungs-Controller (108; 828),
- Mittel zum Ausführen des geordneten Stapels (830) von Aktionsskripten, der das befüllte Aktionsskript aufweist, durch die zweite Anwendung (112) gemäß der von dem geordneten Stapel (830) von Aktionsskripten bestimmten Reihenfolge,
- Mittel (832) zum Abbilden einer Anzeigeausgabe der zweiten Anwendung (112), die sich aus der Ausführung des geordneten Stapels (830), der das befüllte Aktionsskript aufweist, ergibt, durch das Abbildungsmittel (832) auf eine nächste nachfolgende Anzeigeausgabe der ersten Anwendung (104),
- Mittel zum Wiederholen der vorhergehenden Schritte, bis an der ersten grafischen Benutzeroberfläche (810) der ersten Anwendung (104) ein Stopp-Befehl empfangen wird.

25. System nach Anspruch 24, das ferner Mittel aufweist zum erneuten Durchführen der Schritte vor dem Empfangen einer Dateneingabe, falls es nicht möglich ist, das hinzugefügte Aktionsskript mit Dateneingabe zu befüllen.

## Revendications

1. Procédé mis en oeuvre par ordinateur, pour le couplage, par un contrôleur (108 ; 828), d'un premier programme d'application (104) exécuté sur un premier système de traitement de données (800) avec un deuxième programme d'application (112) exécuté sur un deuxième système de traitement de données (802), le contrôleur comprenant un fichier journal (838) permettant de stocker une pluralité de verrous de données génériques sur des objets de données, les objets de données étant accessibles par une pluralité de services du deuxième programme d'application (112), le procédé comprenant ;
- l'appel du deuxième programme d'application (112) exécuté sur le deuxième système de traitement de données (802), par le contrôleur (108 ; 828), à partir du premier programme d'application (104) exécuté sur le premier système de traitement de données (800),
- la réception d'une entrée de données par une opération d'entrée d'utilisateur actuel, par le biais d'une interface d'utilisateur (810) du premier système de traitement de données (800), l'entrée de données spécifiant au moins l'un parmi la pluralité d'objets de données et un service parmi la pluralité de services,
- la lecture du fichier journal (838),
- la détermination de l'inclusion d'un verrou de collision dans le fichier journal, pour l'au moins un parmi la pluralité d'objets de données, un message étant envoyé à l'interface d'utilisateur (810) si le verrou de collision est déterminé, et le service étant appelé si aucun verrou de collision n'est déterminé,
- en réponse à l'appel de service, la réception d'un verrou de données actualisé associé à l'objet de données issu du deuxième programme d'application (112), et
actualisation du fichier journal (838) à l'aide du verrou de données actualisé reçu,
dans lequel
le deuxième programme d'application (112) fixe des verrous et libère tous les verrous fixés avant la fin, le procédé comprenant en outre :
- l'activation du pistage de tous les verrous fixés (412) et libérés (416) par le deuxième programme d'application (112) avant l'appel de deuxième application par le contrôleur,
- sur la base des verrous fixés par la deuxième application, création de verrous génériques par la première application, pour tous les objets pour lesquels des verrous ont été fixés par la deuxième application, les verrous génériques créés pour tous les objets pour lesquels des verrous ont été fixés par la deuxième application étant libérés avant la fin de la première application,
- le verrou générique étant un verrou de données exclusif associé à l'opération en cours de l'interface d'utilisateur (810),
- le verrou générique étant un verrou optimiste.

2. Procédé selon la revendication 1, dans lequel
- si aucun verrou de données exclusif n'est associé à l'objet de données, le service est appelé,
- si un verrou de données exclusif est associé à l'objet de données et si le verrou de données exclusif est également associé à l'interface d'utilisateur (810), le service est appelé,
- si un verrou de données exclusif est associé à l'objet de données et si le verrou de données exclusif est désassocié d'avec l'interface d'utilisateur (810), l'objet de données sera verrouillé et le message sera envoyé à l'interface d'utilisateur (810).

3. Procédé selon la revendication 1, dans lequel
- si aucun verrou de données optimiste n'est associé à l'objet de données et si aucun verrou de données optimiste n'a été associé à l'objet de données pendant l'opération en cours de l'interface d'utilisateur (810), le service est appelé,
- si aucun verrou de données optimiste n'est associé à l'objet de données et si un verrou de données optimiste a été associé à l'objet de données pendant l'opération en cours de l'interface d'utilisateur (810), le message est envoyé à l'interface d'utilisateur (810),
- si un verrou de données optimiste est associé à l'objet de données, le service est appelé.

4. Procédé selon la revendication 3, dans lequel, si le verrou optimiste est associé à l'objet de données, une réservation non-exclusive sera accordée pour l'accès en écriture à l'objet de données pour l'interface d'utilisateur (810), le verrou optimiste n'empêchant pas d'autres interfaces d'utilisateur (810) de recevoir d'autres réservations non-exclusives pour l'accès en écriture à l'objet de données, le verrou optimiste pouvant être converti en un verrou exclusif, la conversion comprenant l'annulation de tout autre verrou optimiste sur les données spécifiques par d'autres utilisateurs.

5. Procédé selon l'une quelconque des revendications précédentes, dans lequel le verrou de données générique associé à l'objet de données comprend un objet de verrou générique et un argument de verrou générique, l'argument de verrou générique décrivant un objet de verrou de données de deuxième application (112) et un argument de verrou de données de deuxième application (112), l'objet de verrou de données de deuxième application (112) et l'argument de verrou de données de deuxième application (112) ayant été reçus avec le verrou de données actualisé associé à l'objet de données issu de la deuxième application (112).

6. Procédé selon l'une quelconque des revendications précédentes, dans lequel l'objet de données est inclus dans une base de données (116 ; 834), une communication étant établie entre la deuxième application (112) et la base de données (116 ; 834) pour accéder à l'objet de données.

7. Procédé selon l'une quelconque des revendications précédentes, dans lequel le type de verrou générique est indépendant du type de verrou de données de la deuxième application (112).

8. Procédé selon l'une quelconque des revendications précédentes, dans lequel la deuxième application (112) est utilisée d'une manière effectivement sans état, la manière effectivement sans état comprenant le démarrage de la deuxième application (112) en réponse à l'appel de service, et la fin de la deuxième application (112) avant la réception de n'importe quel autre appel en provenance de la première application (104).

9. Procédé selon l'une quelconque des revendications précédentes, dans lequel la première application (104) et le verrou de données générique sont associés à une première session, la deuxième application (112) et le verrou de données de deuxième application (112) sont associés à une deuxième session, les première et deuxième sessions étant associées à l'interface d'utilisateur (810), la deuxième session prenant fin avant la première session, le procédé comprenant en outre la suppression du verrou de données de deuxième application (112) avant la fin de la deuxième application (112).

10. Procédé selon l'une quelconque des revendications précédentes, comprenant en outre :
- la réception d'une sortie de la deuxième application (112) par le contrôleur (108 ; 828) en réponse à l'appel de service,
- la génération, par le contrôleur (108 ; 828), d'une première somme de contrôle basée sur l'entrée de données reçue par la session en cours de l'interface d'utilisateur (810) de la première application (104) et sur la sortie reçue,
- l'association de la première somme de contrôle au service demandé, et le stockage de la première somme de contrôle associée ;
- si le même service est demandé à l'aide de la même entrée de données, la nouvelle génération, par le contrôleur d'exécution (108 ; 828), d'une deuxième somme de contrôle basée sur ladite entrée de données et sur la sortie respective reçue en demandant le service à l'aide de ladite entrée de données et en comparant la deuxième somme de contrôle avec la première somme de contrôle.

11. Procédé selon la revendication 9, dans lequel, si les première et deuxième sommes de contrôle sont différentes, un message sera envoyé à l'interface d'utilisateur (810).

12. Procédé selon l'une quelconque des revendications précédentes, dans lequel
- l'interface d'utilisateur (810) de la première application (104) est une première interface d'utilisateur (810) graphique,
- la deuxième application (112) comprend une deuxième interface d'utilisateur graphique (824) présentable sur un écran de la deuxième application (112) pour une navigation d'utilisateur à travers un certain nombre de sorties d'écran (822) de la deuxième application (112) ;
- la deuxième application (112) comprend en outre une deuxième interface (826), la deuxième interface (826) comprenant une fonction d'entrée par lots, ladite deuxième interface étant adaptée pour recevoir l'appel de service, l'appel de service étant incluse dans une pile de scripts d'action spécifiant ladite navigation à travers le nombre de sorties d'écran, la deuxième application (112) exécutant la pile de scripts d'action, l'exécution de la pile étant effectuée par le traitement par lots ;
- la première application (104) comprenant une première interface (814), la première interface (814) étant adaptée pour communiquer avec la deuxième interface ;
- la première application (104) comprend en outre la première interface d'utilisateur graphique (810) présentable sur un écran de la première application (104), les sorties d'écran de la deuxième application (112) étant reportées par mappage sur les sorties d'écran de la première application (104) par des moyen de mappage (832).

13. Procédé selon la revendication 12, le procédé comprenant en outre :
- la réception d'une entrée de navigation par la première application (104), l'entrée de navigation spécifiant une navigation d'utilisateur, d'une sortie d'écran actuelle de la première application (104) vers une sortie d'écran suivante de la première application (104), la sortie d'écran actuelle étant mappée à partir d'une sortie d'écran de la deuxième application (112) vers la sortie d'écran de la première application (104) par le moyen de mappage (832), la navigation d'utilisateur spécifiée impliquant l'appel de service au niveau de la deuxième application (112) ;
- l'ajout d'un script d'action à une pile ordonnée (830) de scripts d'action maintenue par le contrôleur (108 ; 828), l'ajout du script d'action correspondant à l'entrée de navigation, le script d'action ajouté étant ajouté en dernier dans l'ordre de la pile ordonnée (830), le script d'action ajouté étant dénudé par l'entrée de données ;
- l'appel de service par l'apport de la pile ordonnée (830) de scripts d'action à la deuxième interface par le biais du contrôleur (108 ; 828), et par l'exécution de la pile ordonnée (830) de scripts d'action par la deuxième application (112) selon l'ordre donné par la pile ordonnée (830) de scripts d'action ;
- le mappage d'une sortie d'écran de la deuxième application (112) résultant de l'exécution de la pile ordonnée (830), vers la sortie d'écran suivante de la première application (104), par le moyen de mappage (832) ;
- la réception d'une entrée de données au niveau de la première interface d'utilisateur graphique (810), l'entrée de données étant reçue par rapport à ladite sortie d'écran suivante ;
- le remplissage du script d'action ajouté avec ladite entrée de données ;
- l'apport de la pile ordonnée (830) de scripts d'action comprenant le script d'action rempli, à la deuxième application, par le contrôleur d'exécution (108 ; 828) ;
- l'exécution de la pile ordonnée (830) de scripts d'action comprenant le script d'action rempli, par la deuxième application (112), selon l'ordre donné par la pile ordonnée (830) de scripts d'action ;
- le mappage d'une sortie d'écran de la deuxième application (112) résultant de l'exécution de la pile ordonnée (830) comprenant le script d'action rempli, vers une sortie d'écran consécutive suivante de la première application (104), par le moyen de mappage (832) ;
- la répétition des étapes précédentes, jusqu'à la réception d'une commande d'arrêt au niveau de la première interface d'utilisateur graphique (810) de la première application (104).

14. Procédé selon la revendication 13, dans lequel, s'il n'est pas possible de remplir le script d'action ajouté avec une entrée de données, les étapes précédentes de réception d'une entrée de données sont exécutées à nouveau.

15. Système de traitement de données comprenant une première application (104), une deuxième application (112) et un contrôleur (108 ; 828), la première application (104) comprenant une interface d'utilisateur (810), le contrôleur (108 ; 828) comprenant :
- des moyens pour appeler, par le biais du contrôleur (108 ; 828), le deuxième programme d'application (112) exécuté sur le deuxième système de traitement de données (802) à partir du premier programme d'application (104) exécuté sur le premier système de traitement de données (800),
- des moyens pour recevoir une entrée de données par une opération en cours de l'interface d'utilisateur (810) de la première application (104), l'entrée de données étant liée à l'objet de données, l'objet de données étant lié au service,
- des moyens pour lire un fichier journal (838), le fichier journal (838) comprenant un verrou de données générique associé à l'objet de données ;
- des moyens pour appeler le service et des moyens pour envoyer un message à l'interface d'utilisateur (810),
- des moyens pour déterminer si le service est appelé ou si un message est envoyé à l'interface d'utilisateur (810), le contrôleur (108 ; 828) étant adapté pour déterminer, en fonction du verrou de données générique, si le service doit être appelé ou si un message doit être envoyé à l'interface d'utilisateur (810),
- des moyens pour recevoir un verrou de données actualisé associé à l'objet de données issu du deuxième programme d'application (112), en réponse à l'appel de service, et
des moyens pour actualiser le fichier journal (838) à l'aide du verrou de données actualisé reçu,
dans lequel
la deuxième application est en outre adaptée pour fixer des verrous et pour libérer tous les verrous fixés avant la fin, le système comprenant en outre :
- des moyens pour l'activation du pistage de tous les verrous fixés par la deuxième application, avant l'appel de deuxième application par le contrôleur,
- des moyens pour créer des verrous génériques par le biais de la première application, pour tous les objets pour lesquels des verrous ont été fixés par la deuxième application, les moyens pour la création de verrous génériques étant adaptés pour créer les verrous génériques sur la base des verrous fixés par la deuxième application, tout en maintenant les verrous génériques uniquement pendant le fonctionnement de la première application,
- le verrou générique étant un verrou de données exclusif associé à l'opération en cours de l'interface d'utilisateur (810),
- le verrou générique étant un verrou optimiste.

16. Système selon la revendication 15, dans lequel le verrou générique est un verrou de données exclusif associé à l'opération en cours de l'interface d'utilisateur (810), le système comprenant en outre :
- des moyens pour verrouiller l'objet de données,
- des moyens pour envoyer un message à l'interface d'utilisateur (810),
- des moyens pour déterminer si un verrou de données exclusif est en outre associé à l'objet de données,
- des moyens pour déterminer si le verrou de données exclusif est en outre associé à l'interface d'utilisateur (810),
dans lequel le contrôleur (108 ; 828) est adapté pour :
- appeler le service si aucun verrou de données exclusif n'est associé à l'objet de données,
- appeler le service si un verrou de données exclusif est associé à l'objet de données, le verrou de données exclusif étant en outre associé à l'interface d'utilisateur (810),
- verrouiller l'objet de données et envoyer un message à l'interface d'utilisateur (810) si un verrou de données exclusif est associé à l'objet de données, le verrou de données exclusif étant désassocié de l'interface d'utilisateur (810).

17. Système selon la revendication 15, dans lequel le verrou générique est un verrou optimiste, le contrôleur (108 ; 828) comprenant en outre :
- des moyens pour déterminer si un verrou de données optimiste est associé à l'objet de données,
dans lequel le contrôleur (108 ; 828) est adapté pour :
- appeler le service si aucun verrou de données optimiste n'est associé à l'objet de données et si aucun verrou de données optimiste n'a été associé à l'objet de données pendant l'opération en cours de l'interface d'utilisateur (810),
- envoyer un message à l'interface d'utilisateur (810) si aucun verrou de données optimiste n'est associé à l'objet de données et si un verrou de données optimiste a été associé à l'objet de données pendant l'opération en cours de l'interface d'utilisateur (810),
- appeler le service si un verrou de données optimiste est associé à l'objet de données.

18. Système selon la revendication 17, comprenant en outre
- des moyens pour accorder une réservation non-exclusive pour l'accès en écriture à l'objet de données pour l'interface d'utilisateur (810),
- des moyens pour convertir un verrou optimiste en un verrou exclusif, le contrôleur (108 ; 828) étant en outre adapté pour accorder une réservation non-exclusive pour l'accès en écriture à l'objet de données pour l'interface d'utilisateur (810) si le verrou optimiste est associé à l'objet de données, le verrou optimiste n'empêchant pas d'autres interfaces d'utilisateur (810) de recevoir d'autres réservations non-exclusives pour l'accès en écriture à l'objet de données, le verrou optimiste pouvant être converti en un verrou exclusif, la conversion comprenant la suppression de tout autre verrou optimiste sur les données spécifiques par d'autres utilisateurs.

19. Système selon l'une quelconque des revendications précédentes 15 à 18, comprenant en outre une base de données (116 ; 834).

20. Système selon l'une quelconque des revendications précédentes 15 à 19, dans lequel la deuxième application (112) est adaptée pour être utilisée d'une manière effectivement sans état.

21. Système selon l'une quelconque des revendications 15 à 20, comprenant en outre :
- des moyens pour recevoir une sortie de la deuxième application (112) par le biais du contrôleur (108 ; 828) en réponse à l'appel de service,
- des moyens (836) pour générer, par le biais du contrôleur (108 ; 828), une première somme de contrôle basée sur l'entrée de données reçue par la session en cours de l'interface d'utilisateur (810) de la première application (104) et sur la sortie reçue,
- des moyens pour associer la première somme de contrôle au service demandé, et pour stocker la première somme de contrôle associée ;
- des moyens (836) pour générer, si le même service est demandé à l'aide de la même entrée de données, une deuxième somme de contrôle basée sur ladite entrée de données et sur la sortie respective reçue en appelant le service à l'aide de ladite entrée de données, et
- des moyens pour comparer la deuxième somme de contrôle avec la première somme de contrôle.

22. Système selon la revendication 21, comprenant en outre des moyens pour envoyer un message à l'interface d'utilisateur (810) si les première et deuxième sommes de contrôle sont différentes.

23. Système selon l'une quelconque des revendications précédentes 15 à 22, dans lequel
- l'interface d'utilisateur de la première application (104) est une première interface d'utilisateur graphique (108),
- la deuxième application (112) comprend une deuxième interface d'utilisateur graphique (824) présentable sur un écran de la deuxième application (112) pour une navigation d'utilisateur à travers un certain nombre de sorties d'écran de la deuxième application (112) ;
- la deuxième application (112) comprend en outre une deuxième interface, la deuxième interface comprenant une fonction d'entrée par lots, ladite deuxième interface étant adaptée pour recevoir l'appel de service, l'appel de service étant incluse dans une pile (830) de scripts d'action spécifiant ladite navigation à travers le nombre de sorties d'écran, la deuxième application (112) exécutant la pile (830) de scripts d'action, l'exécution de la pile (830) étant effectuée par un traitement par lots ;
- la première application (104) comprenant une première interface, la première interface étant adaptée pour communiquer avec la deuxième interface ;
- la première application (104) comprenant en outre la première interface d'utilisateur graphique (810) présentable sur un écran de la première application (104), les sorties d'écran de la deuxième application (112) étant reportées par mappage sur les sorties d'écran de la première application (104) par des moyen de mappage (832).

24. Système selon la revendication 23, comprenant en outre :
- des moyens pour recevoir une entrée de navigation par la première application (104), l'entrée de navigation spécifiant une navigation d'utilisateur, d'une sortie d'écran actuelle de la première application (104) vers une sortie d'écran suivante de la première application (104), la sortie d'écran actuelle étant mappée d'une sortie d'écran de la deuxième application (112) vers la sortie d'écran de la première application (104) par le moyen de mappage (832), la navigation d'utilisateur spécifiée impliquant l'appel de service au niveau de la deuxième application (112) ;
- des moyens pour ajouter un script d'action à une pile ordonnée (830) de scripts d'action maintenue par le contrôleur (108 ; 828), le script d'action ajouté correspondant à l'entrée de navigation, le script d'action ajouté étant ajouté en dernier dans l'ordre de la pile ordonnée (830), le script d'action ajouté étant dénudé par une entrée de données ;
- des moyens pour appeler le service en fournissant la pile ordonnée (830) de scripts d'action à la deuxième interface par le biais du contrôleur (108 ; 828), et en exécutant la pile ordonnée (830) de scripts d'action par le biais de la deuxième application (112), selon l'ordre donné par la pile ordonnée (830) de scripts d'action ;
- des moyens (832) pour mapper une sortie d'écran de la deuxième application (112) résultant de l'exécution de la pile ordonnée (830), vers la sortie d'écran suivante de la première application (104), par le moyen de mappage (832) ;
- des moyens pour recevoir une entrée de données au niveau de la première interface d'utilisateur graphique (810), l'entrée de données étant reçue par rapport à ladite sortie d'écran suivante ;
- des moyens pour remplir le script d'action ajouté avec ladite entrée de données ;
- des moyens pour fournir la pile ordonnée (830) de scripts d'action comprenant le script d'action rempli à la deuxième application, par le contrôleur d'exécution (108 ; 828) ;
- des moyens pour exécuter la pile ordonnée (830) de scripts d'action comprenant le script d'action rempli, par la deuxième application (112), selon l'ordre donné par la pile ordonnée (830) de scripts d'action ;
- des moyens (832) pour mapper une sortie d'écran de la deuxième application (112) résultant de l'exécution de la pile ordonnée (830) comprenant le script d'action rempli, vers une sortie d'écran consécutive suivante de la première application (104), par le moyen de mappage (832) ;
- des moyens pour répéter les étapes précédentes, jusqu'à la réception d'une commande d'arrêt au niveau de la première interface d'utilisateur graphique (810) de la première application (104).

25. Système selon la revendication 24, comprenant en outre des moyens pour exécuter à nouveau les étapes précédentes de réception d'une entrée de données s'il n'est pas possible de remplir le script d'action ajouté avec une entrée de données.
